(19) **Europäisches Patentamt European Patent Office Office européen des brevets**

(11) **EP 4 606 511 A1**

(12) **EUROPEAN PATENT APPLICATION**
published in accordance with Art. 153(4) EPC

(43) Date of publication:
**27.08.2025 Bulletin 2025/35**

(21) Application number: **23879842.5**

(22) Date of filing: **18.10.2023**

(51) International Patent Classification (IPC):
**B23K 26/38** (2014.01)   **B23K 26/073** (2006.01)

(52) Cooperative Patent Classification (CPC):
**B23K 26/073; B23K 26/38;** Y02E 60/10

(86) International application number:
**PCT/JP2023/037761**

(87) International publication number:
**WO 2024/085199 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.10.2022  JP 2022167125**
**18.10.2022  JP 2022167126**

(71) Applicant: **FURUKAWA ELECTRIC CO., LTD.**
**Tokyo 100-8322 (JP)**

(72) Inventors:
• **NOGAMI, Yusuke**
  **Tokyo 100-8322 (JP)**
• **MATSUNAGA, Keigo**
  **Tokyo 100-8322 (JP)**
• **KAYAHARA, Takashi**
  **Tokyo 100-8322 (JP)**
• **SUZUKI, Tetsuo**
  **Tokyo 100-8322 (JP)**

(74) Representative: **SSM Sandmair**
**Patentanwälte Rechtsanwalt**
**Partnerschaft mbB**
**Joseph-Wild-Straße 20**
**81829 München (DE)**

(54) **METHOD FOR LASER-CUTTING METAL FOIL**

(57) A metal foil laser cutting method includes, for example, intermittently irradiating a metal foil that forms an electrode of a battery and that serves as a workpiece with a pulse of a laser light of which energy per pulse is 2 [mJ] or more and 100 [mJ] or less and of which rise time is 2 [μs] or shorter to laser cut the workpiece. The pulse may intermittently be emitted at a frequency of 500 [kHz] or less. The metal foil may have a thickness of 500 [μm] or less. The metal foil may have a site covered by a coating and a site not covered by a coating.

FIG.3

EP 4 606 511 A1

**Description**

Field

The present invention relates to a metal foil laser cutting method.

Background

As a method for cutting a workpiece that was produced by using a metal material, a laser cutting process that uses laser light irradiation is known. The laser cutting process represents a method by which the workpiece is cut by emitting the laser light onto a certain part to be cut of the workpiece, so as to melt the part with energy of the laser light (see, for example, Non Patent Literature 1).

Citation List

Non Patent Literature

Non Patent Literature 1: Patwa, Rahul, et al. "High speed laser cutting of electrodes for advanced batteries", International Congress on Applications of Lasers & Electro Optics, 2010.

Summary

Technical Problem

When such a workpiece is a metal foil, because the metal foil easily gets deformed or torn, it may be difficult, in some situations, to achieve desired quality if various types of parameters in the laser cutting process are set to be similar to those used for a thicker metal member.
In addition, when the metal foil is to be applied to an electrode (a positive electrode or a negative electrode) of a battery, the laser cutting process is required to have higher quality.
In view of the above, one of objects of the present invention is to provide a novel and improved metal foil laser cutting method that makes it possible to laser cut a metal foil that forms an electrode of a battery and that serves as a workpiece.

Solution to Problem

A metal foil laser cutting method according to the present invention includes, for example, intermittently irradiating a metal foil that forms an electrode of a battery and that serves as a workpiece with a pulse of a laser light of which energy per pulse is 2 [mJ] or more and 100 [mJ] or less and of which rise time is 2 [$\mu$s] or shorter to laser cut the workpiece.
In the metal foil laser cutting method, the pulse can be intermittently emitted at a frequency of 500 [kHz] or less.
In the metal foil laser cutting method, the electrode can be a positive electrode, and an overlapping ratio R between an irradiation region of the pulse and an irradiation region of a following pulse can be -21 [%] or more, when the overlapping ratio R is defined by using Expression (1) presented below:

$$R = L2 \ / \ L1 \hspace{6cm} (1)$$

where L1 denotes a length of the irradiation region in a scanning direction; and L2 denotes a length, in the scanning direction, of an overlapping region between the pulse and the following pulse if the pulse and the following pulse overlap with each other in the scanning direction, while L2 is equal to 0 if the pulse and the following pulse touch each other in the scanning direction, and is equal to -1 if the pulse and the following pulse are positioned apart from each other in the scanning direction by a distance I (> 0).
In the metal foil laser cutting method, the electrode can be a positive electrode, and irradiation energy of the laser light can be 0.05 [J/mm] or more and to 2.1 [J/mm] or less.
In the metal foil laser cutting method, the electrode can be a negative electrode, and an overlapping ratio R between an irradiation region of the pulse and an irradiation region of a following pulse can be -1 [%] or more, when the overlapping ratio R is defined by using Expression (1) presented below:

$$R = L2 / L1 \qquad\qquad (1)$$

where L1 denotes a length of the irradiation region in a scanning direction; and L2 denotes a length, in the scanning direction, of an overlapping region between the pulse and the following pulse if the pulse and the following pulse overlap with each other in the scanning direction, while L2 is equal to 0 if the pulse and the following pulse touch each other in the scanning direction, and is equal to -1 if the pulse and the following pulse are positioned apart from each other in the scanning direction by a distance I (> 0).

In the metal foil laser cutting method, the electrode can be a negative electrode, and irradiation energy of the laser light can be 0.005 [J/mm] or more and 4.0 [J/mm] or less.

In the metal foil laser cutting method, the metal foil can have a thickness of 500 [$\mu$m] or less.

In the metal foil laser cutting method, the metal foil can have a site covered by a coating and a site not covered by a coating.

In the metal foil laser cutting method, the laser light can have a spot diameter of 100 [$\mu$m] or less.

In the metal foil laser cutting method, the laser light can have a spot diameter of 50 [$\mu$m] or less.

In the metal foil laser cutting method, the laser light can have a spot diameter of 28 [$\mu$m] or less.

In the metal foil laser cutting method, the laser light can have a peak output of 100 [W] or more.

In the metal foil laser cutting method, the metal foil can include a metal layer made of an aluminum-based material.

In the metal foil laser cutting method, the laser light can have a peak output of 200 [W] or more.

In the metal foil laser cutting method, the metal foil can include an active material layer applied to a surface of the metal layer.

In the metal foil laser cutting method, irradiation energy of the laser light can be 0.06 [J/mm] or more and 0.23 [J/mm] or less.

In the metal foil laser cutting method, the metal foil can include a metal layer made of an aluminum-based material and an electrically-insulative ceramic layer made of ceramics, the electrically-insulative ceramic layer being applied to a surface of the metal layer.

In the metal foil laser cutting method, the pulse can have a frequency of 200 [kHz] or less.

In the metal foil laser cutting method, irradiation energy of the laser light can be 0.05 [J/mm] or more and 0.26 [J/mm] or less.

In the metal foil laser cutting method, an overlapping ratio R between an irradiation region of the pulse and an irradiation region of a following pulse can be 24 [%] or more, when the overlapping ratio R is defined by using Expression (1) presented below:

$$R = L2 / L1 \qquad\qquad (1)$$

where L1 denotes a length of the irradiation region in a scanning direction; and L2 denotes a length, in the scanning direction, of an overlapping region between the pulse and the following pulse if the pulse and the following pulse overlap with each other in the scanning direction, while L2 is equal to 0 if the pulse and the following pulse touch each other in the scanning direction, and is equal to -1 if the pulse and the following pulse are positioned apart from each other in the scanning direction by a distance I (> 0).

In the metal foil laser cutting method, the metal foil can include a metal layer made of an aluminum-based material and an electrically-insulative polymer layer made of a polymer, the electrically-insulative polymer layer being applied to a surface of the metal layer.

In the metal foil laser cutting method, when the workpiece is cut by performing a scan once with the laser light, the laser light can have a peak output of 600 [W] or more and 800 [W] or less, and an overlapping ratio R between an irradiation region of the pulse and an irradiation region of a following pulse can be 72 [%] or more and 80 [%] or less, when the overlapping ratio R is defined by using Expression (1) presented below:

$$R = L2 / L1 \qquad\qquad (1)$$

where L1 denotes a length of the irradiation region in a scanning direction; and L2 denotes a length, in the scanning direction, of an overlapping region between the pulse and the following pulse if the pulse and the following pulse overlap with each other in the scanning direction, while L2 is equal to 0 if the pulse and the following pulse touch each other in the scanning direction, and is equal to -1 if the pulse and the following pulse are positioned apart from each other in the scanning direction by a distance I (> 0).

In the metal foil laser cutting method, when the workpiece is cut by performing a scan twice with the laser light, the laser light can have a peak output of 400 [W] or more and 600 [W] or less, and an overlapping ratio R between an irradiation region of the pulse and an irradiation region of a following pulse can be 63 [%] or more and 74 [%] or less, when the overlapping ratio R is defined by using Expression (1) presented below:

$$R = L2 / L1 \hspace{4cm} (1)$$

where L1 denotes a length of the irradiation region in a scanning direction; and L2 denotes a length, in the scanning direction, of an overlapping region between the pulse and the following pulse if the pulse and the following pulse overlap with each other in the scanning direction, while L2 is equal to 0 if the pulse and the following pulse touch each other in the scanning direction, and is equal to -1 if the pulse and the following pulse are positioned apart from each other in the scanning direction by a distance I (> 0).

In the metal foil laser cutting method, multiple scans can be performed on a mutually same path.

In the metal foil laser cutting method, the multiple scans can include the two or more scans each with different laser light irradiation conditions.

In the metal foil laser cutting method, the metal foil can include a metal layer made of a copper-based material.

In the metal foil laser cutting method, irradiation energy of the laser light can be 0.8 [J/mm] or less.

In the metal foil laser cutting method, the metal foil can include an active material layer applied to a surface of the metal layer.

In the metal foil laser cutting method, the metal foil can include an active material layer applied to a surface of the metal layer, and irradiation energy of the laser light can be 0.75 [J/mm] or less.

Advantageous Effects of Invention

According to the present invention, it is possible to provide the novel and further improved metal foil laser cutting method that makes it possible to laser cut the metal foil that forms an electrode of a battery and that serves as the workpiece.

Brief Description of Drawings

FIG. 1 is an illustrative schematic diagram of a laser cutting apparatus according to a first embodiment.

FIG. 2 is an illustrative and schematic cross-sectional view of a metal foil serving as an example of a workpiece to be processed by the laser cutting apparatus according to the embodiment.

FIG. 3 is an illustrative and schematic plan view of the metal foil in FIG. **2.**

FIG. 4 is an illustrative and schematic cross-sectional view of a metal foil that is different from the one in FIG. 3 and serves as another example of the workpiece to be processed by the laser cutting apparatus according to the embodiment.

FIG. 5 is an illustrative and schematic plan view of the metal foil in FIG. **4.**

FIG. 6 is a schematic chart illustrating an example of a time waveform of an output of a light source of the laser cutting apparatus according to the embodiment.

FIG. 7 is a schematic plan view illustrating an example of irradiation ranges, on a surface of a workpiece, of two temporally-consecutive pulses of laser light being output from the laser cutting apparatus according to the embodiment.

FIG. 8 is a schematic plan view illustrating another example of irradiation ranges, on the surface of a workpiece, of two temporally-consecutive pulses of the laser light being output from the laser cutting apparatus according to the embodiment.

FIG. 9 presents schematic charts of an example of a time waveform of an output of the light source of the laser cutting apparatus according to the embodiment and an example of a time waveform of an output of a pulse laser light source such as a mode-locked laser.

FIG. 10 presents schematic charts illustrating an example of a time waveform of an output of the light source of the laser cutting apparatus according to the embodiment and an irradiation state thereof, together with an example of a time waveform of an output of a light source of a laser cutting apparatus having relatively greater rise time and pulse width and an irradiation state thereof.

FIG. 11 is a diagram for explaining a definition of a spot diameter of the laser cutting apparatus according to the embodiment.

FIG. 12 presents a side-view captured image of an example of an end edge that has been cut of a metal foil serving as a workpiece.

FIG. 13 presents a plan-view captured image of the example of the end edge that has been cut of the metal foil serving as the workpiece.

FIG. 14 presents a plan-view captured image of another example of an end edge that has been cut of a metal foil serving as a workpiece.

FIG. 15 presents a side-view captured image of an example of an end edge that has been cut of a metal foil serving as a workpiece.

FIG. 16 presents a plan-view captured image of the example of the end edge that has been cut of the metal foil serving as the workpiece.

FIG. 17 presents a plan-view captured image of another example of an end edge that has been cut of a metal foil serving as a workpiece.

FIG. 18 is a chart illustrating an example of evaluation results on irradiation energy of laser light and frequencies of a pulse, with regard to the height of protrusions in the thickness direction at a cut end edge observed when an uncoated aluminum foil was cut by the laser cutting apparatus according to the embodiment.

FIG. 19 is a chart illustrating an example of evaluation results on overlapping ratios of pulses and outputs of the light source, with regard to the height of protrusions in a direction along the surface at a cut end edge observed when an uncoated aluminum foil was cut by the laser cutting apparatus according to the embodiment.

FIG. 20 is a chart illustrating an example of evaluation results on irradiation energy of the laser light and frequencies of a pulse, with regard to the width of a discoloration region at a cut end edge observed when an uncoated aluminum foil was cut by the laser cutting apparatus according to the embodiment.

FIG. 21 is a chart illustrating an example of evaluation results on irradiation energy of the laser light and frequencies of a pulse, with regard to the height of the protrusions in the thickness direction at a cut end edge observed when an aluminum foil having active material layers was cut by the laser cutting apparatus according to the embodiment.

FIG. 22 is a chart illustrating an example of evaluation results on overlapping ratios of pulses and outputs of the light source, with regard to the height of the protrusions in the direction along the surface at a cut end edge observed when an aluminum foil having the active material layers was cut by the laser cutting apparatus according to the embodiment.

FIG. 23 is a chart illustrating an example of evaluation results on irradiation energy of the laser light and frequencies of a pulse, with regard to the width of a discoloration region at a cut end edge observed when an aluminum foil having the active material layers was cut by the laser cutting apparatus according to the embodiment.

FIG. 24 is a chart illustrating an example of evaluation results on irradiation energy of the laser light and frequencies of a pulse, with regard to the height of the protrusions in the thickness direction at a cut end edge observed when an aluminum foil having ceramic insulation layers was cut by the laser cutting apparatus according to the embodiment.

FIG. 25 is a chart illustrating an example of evaluation results on overlapping ratios of pulses and outputs of the light source, with regard to the height of the protrusions in the direction along the surface at a cut end edge observed when an aluminum foil having the ceramic insulation layers was cut by the laser cutting apparatus according to the embodiment.

FIG. 26 is a chart resulting from performing a scan once and illustrating an example of evaluation results on overlapping ratios of pulses and outputs of the light source, with regard to the height of the protrusions in the direction along the surface at a cut end edge observed when an aluminum foil having polymer insulation layers was cut by the laser cutting apparatus according to the embodiment.

FIG. 27 is a chart resulting from performing a scan twice and illustrating an example of evaluation results on overlapping ratios of pulses and outputs of the light source, with regard to the height of the protrusions in the direction along the surface at a cut end edge observed when an aluminum foil having the polymer insulation layers was cut by the laser cutting apparatus according to the embodiment.

FIG. 28 is a chart illustrating an example of evaluation results on irradiation energy of the laser light and frequencies of a pulse, with regard to the height of the protrusions in the thickness direction at a cut end edge observed when a copper foil coated with an active material was cut by the laser cutting apparatus according to the embodiment.

FIG. 29 is a chart illustrating an example of evaluation results on overlapping ratios of pulses and outputs of the light source, with regard to the height of the protrusions in the direction along the surface at a cut end edge observed when a copper foil coated with the active material was cut by the laser cutting apparatus according to the embodiment.

FIG. 30 is a chart illustrating an example of evaluation results on irradiation energy of the laser light and frequencies of a pulse, with regard to the width of a discoloration region at a cut end edge observed when a copper foil coated with the active material was cut by the laser cutting apparatus according to the embodiment.

FIG. 31 is a chart illustrating an example of evaluation results on irradiation energy of the laser light and frequencies of a pulse, with regard to the height of the protrusions in the thickness direction at a cut end edge observed when a copper foil not coated with an active material was cut by the laser cutting apparatus according to the embodiment.

FIG. 32 is a chart illustrating an example of evaluation results on overlapping ratios of pulses and outputs of the light source, with regard to the height of the protrusions in the direction along the surface at a cut end edge observed when a copper foil not coated with an active material was cut by the laser cutting apparatus according to the embodiment.

FIG. 33 is a chart illustrating an example of evaluation results on irradiation energy of the laser light and frequencies of a pulse, with regard to the width of a discoloration region at a cut end edge observed when a copper foil not coated with an active material was cut by the laser cutting apparatus according to the embodiment.

FIG. 34 is an illustrative schematic diagram of a laser cutting apparatus according to a second embodiment.

Description of Embodiments

The following will disclose illustrative embodiments of the present invention. The configurations of the embodiments described below and the actions and the results (the advantageous effects) brought about by the configurations are merely examples. It is possible to realize the present invention by using other configurations besides those disclosed in the following embodiments. Further, with the present invention, it is possible to achieve at least one of various types of advantageous effects (which include derivative advantageous effects) realized by the configurations.

The embodiments described below include certain configurations that are the same as each other. Thus, by using the configurations of the embodiments, it is possible to achieve the same actions and advantageous effects based on the same configurations. Further, in the following sections, some of the configurations that are the same will be referred to by using the same reference characters, and duplicate explanations thereof may be omitted.

Further, in the drawings, the arrow X indicates an X direction; the arrow Y indicates a Y direction; and the arrow Z indicates a Z direction. The X direction, the Y direction, and the Z direction intersect one another and are orthogonal to one another. The X direction and the Y direction are directions along a surface Wa (a processed surface) of a workpiece to be processed or being processed (hereinafter "workpiece") W, whereas the Z direction is a direction of a normal line to the surface Wa. Furthermore, although the X direction is indicated as a scanning direction SD in some of the drawings, it is sufficient as long as the scanning direction SD intersects the Z direction, and the scanning direction SD does not necessarily need to be the X direction.

[First Embodiment]

[Configuration of Laser Cutting Apparatus]

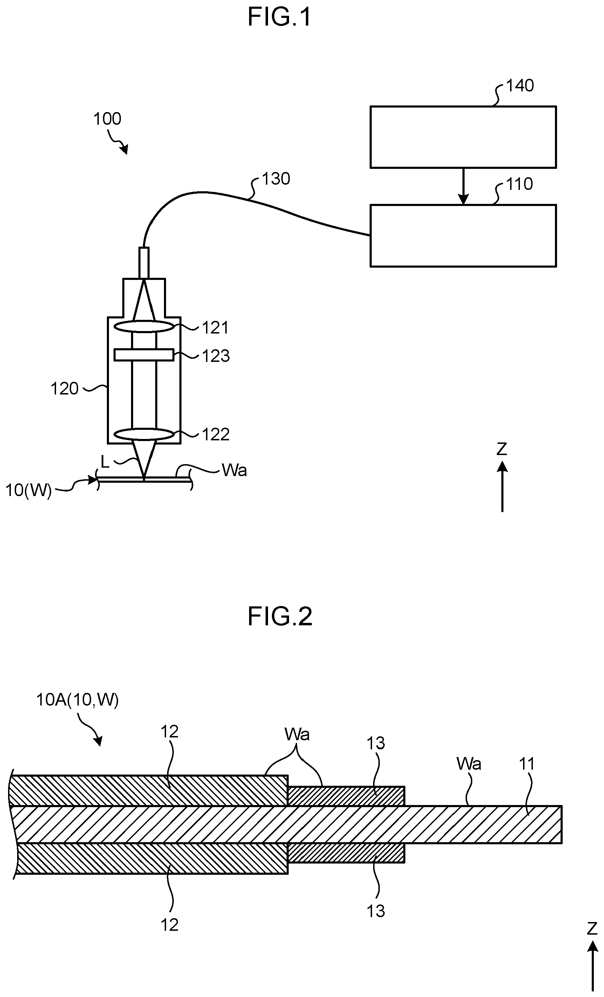

FIG. 1 is a schematic diagram of a laser cutting apparatus 100 according to a first embodiment. The laser cutting apparatus 100 includes a laser apparatus 110, an optical head 120, an optical fiber 130, and a controller 140.

The laser apparatus 110 includes a laser emitter as a light source and, in an example, is configured to be able to output single-mode laser light having power of a number of kWs. The wavelength of the laser light output by the laser apparatus 110 may be, for example, 800 [nm] or more and 1200 [nm] or less, but is not limited to this example. Further, the laser apparatus 110 is capable of intermittently outputting a continuous emission laser, for example, at a frequency of 10 [MHz] or less. For instance, it is possible to realize the laser apparatus 110, by providing a fiber laser configured to supply pumping light to an optical amplification fiber, either continuously or intermittently (discontinuously) at a prescribed frequency.

The optical fiber 130 optically connects the laser apparatus 110 and the optical head 120 together, so as to guide the laser light output from the laser apparatus 110 to the optical head 120. When the laser apparatus 110 outputs the single-mode laser light, the optical fiber 130 is configured to transmit the single-mode laser light. In that situation, $M^2$ beam quality of the single-mode laser light is set to be 1.2 or less. Further, when the laser apparatus 110 outputs multi-mode laser light, the optical fiber 130 is configured to transmit multi-mode laser light.

The optical head 120 is an optical apparatus for emitting the laser light input from the laser apparatus 110 onto the surface Wa of the workpiece W. The optical head 120 includes a collimate lens 121, a condenser lens 122, and a Diffractive Optical Element (DOE) 123. The collimate lens 121 and the condenser lens 122 may be referred to as optical component parts. The optical head 120 may include other optical component parts besides the collimate lens 121 and the condenser lens 122.

In the present embodiment, the optical head 120 is configured to be able to change the position thereof relative to the workpiece W, for the purpose of scanning the surface Wa of the workpiece W with laser light L, while emitting the laser light L. Relative movements of the optical head 120 and the workpiece W may be realized by moving of the optical head 120, moving of the workpiece W, or moving of both the optical head 120 and the workpiece W.

The collimate lens 121 is configured to collimate the laser light being input. The laser light that has been collimated becomes collimated light. The condenser lens 122 is configured to condense the laser light in the form of the collimated light and to emit the condensed light onto the workpiece W as the laser light L (output light). Further, the DOE 123 is provided between the collimate lens 121 and the condenser lens 122 and is configured to form the shape of a beam (hereinafter, "beam shape") of the laser light. For example, the DOE 123 is structured by placing, on top of one another, a plurality of diffraction gratings having mutually-different cycles. The DOE 123 is capable of forming the beam having a desirable shape, either by bending the collimated light in a direction affected by the diffraction gratings or by placing beams of the collimated light on top of one another. The DOE 123 may be referred to as a beam shaper.

With the configuration described above, the optical head 120 is configured to emit the laser light L, in the direction opposite to the Z direction, onto the surface Wa of the workpiece W. The emission direction of the laser light L from the optical head 120 is the direction opposite to the Z direction. For example, the optical head 120 is capable of condensing the laser light L so as to have a beam diameter of 10 [μm] or more and 100 [μm] or less.

The controller 140 is capable of controlling, among others, operations of the laser apparatus 110, as well as operations of a relative movement mechanism (not illustrated) configured to cause the relative movements of the optical head 120 and the workpiece W, so that the surface Wa is scanned with the laser light L.

[Workpiece Being Processed]

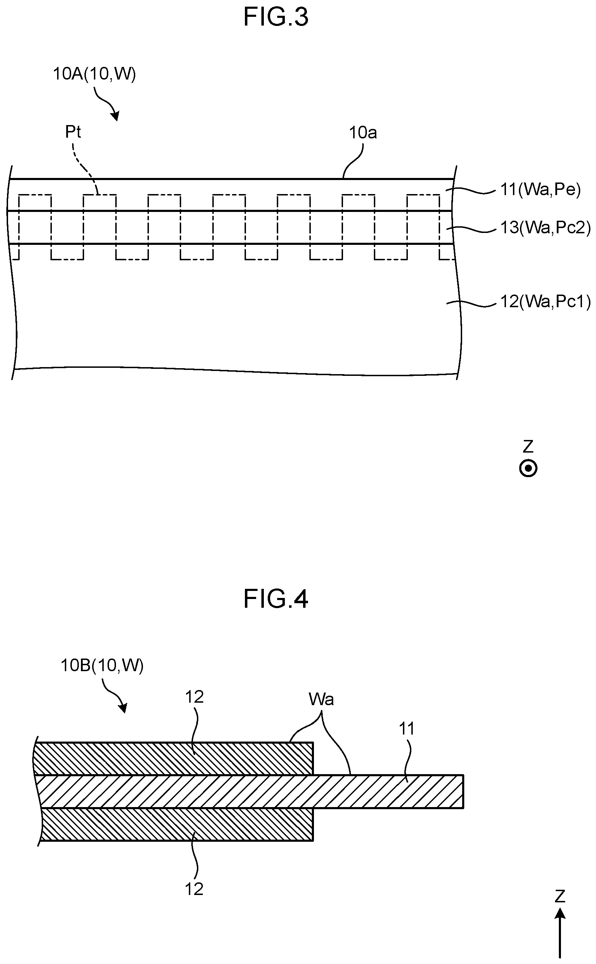

FIG. 2 is a cross-sectional view of a metal foil 10A (10) serving as a workpiece W. FIG. 3 is a plan view of the metal foil 10A (10). The workpiece W by the laser cutting apparatus 100 may be, for example, the metal foil 10A illustrated in FIGS. 3 and 4. For example, the metal foil 10A forms a positive electrode of a battery such as a lithium ion battery. As for the thickness of the metal foil 10A, the thickness may be equal to 500 [μm] or less, for example, but is not limited to this example.

As illustrated in FIG. 2, the metal foil 10A includes a metal layer 11, active material layers 12, and electrically-insulative layers (hereinafter, "insulation layers") 13. The active material layers 12 are coatings formed on both sides, in the thickness direction, of the metal layer 11, i.e., on both of the front and the rear surfaces of the metal layer 11. The insulation layers 13 are coatings formed on both sides, in the thickness direction, of the metal layer 11, i.e., on both of the front and the rear surfaces of the metal layer 11, in positions other than the positions of the active material layers 12. The active material layers 12 and the insulation layers 13 may be referred to as coated films, coated materials, surface layers, or surface layer members. In the present example, the metal layer 11 is produced by using, for example, an aluminum-based material such as pure aluminum or an aluminum alloy. The active material layers 12 are produced by using, for example, an active material such as lithium cobalt oxide, lithium manganese oxide, lithium iron phosphate, or a ternary system material (nickel, manganese, and cobalt). Further, the insulation layers 13 are produced by using, for example, ceramics such as alumina or a polymer such as ABS resin.

As illustrated in FIG. 3, formed on the surface Wa of the metal foil 10A formed as the electrode of a battery are: covered sites Pc1 and Pc2 where the metal layer 11 is covered by the active material layers 12 and the insulation layers 13, i.e., the coatings; and an exposed site Pe where the metal layer 11 is exposed without being covered by the active material layers 12. By scanning the surface Wa of the metal foil 10A with the laser light L on a prescribed scanning path Pt, the laser cutting apparatus 100 is capable of continuously cutting both the covered sites Pc1 and Pc2 and the exposed site Pe. In that situation, the controller 140 is capable of controlling the laser apparatus 110 and the relative movement mechanism, so as to switch between an irradiation condition of the laser light L used at the time of cutting the covered sites and an irradiation condition of the laser light L used at the time of cutting the exposed site, while scanning the surface Wa with the laser light L.

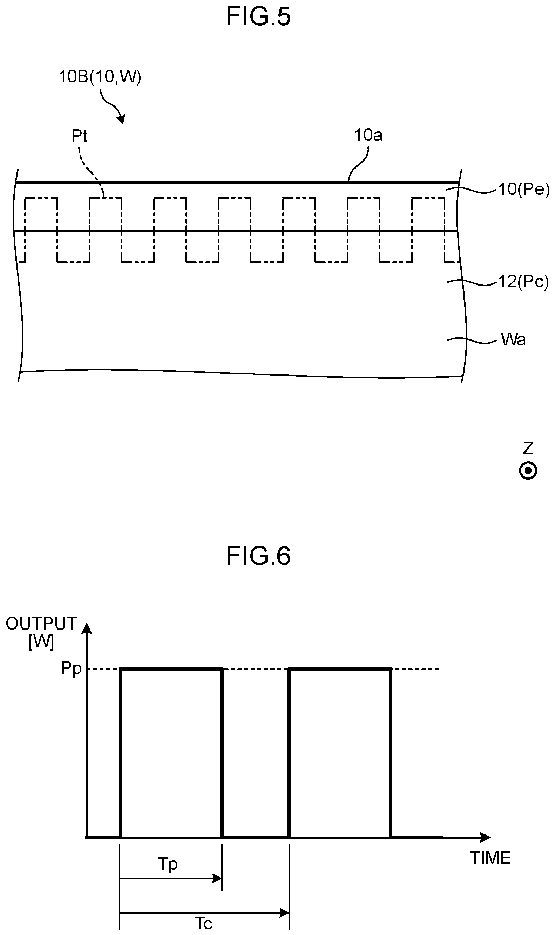

Further, FIG. 4 is a cross-sectional view of a metal foil 10B (10) serving as a workpiece W. FIG. 5 is a plan view of the metal foil 10B (10). The workpiece W by the laser cutting apparatus 100 may be, for example, the metal foil 10B illustrated in FIGS. 4 and 5. For example, the metal foil 10B forms a negative electrode of a battery such as a lithium ion battery. As for the thickness of the metal foil 10B, the thickness may be equal to 500 [μm] or less, for example, but is not limited to this example.

As illustrated in FIG. 4, the metal foil 10B includes a metal layer 11 and active material layers 12. The active material layers 12 are coatings formed on both sides, in the thickness direction, of the metal layer 11, i.e., on both of the front and the rear surfaces of the metal layer 11. The active material layers 12 may be referred to as coated films, coated materials, surface layers, or surface layer members. In the present example, the metal layer 11 is produced by using, for example, a copper-based material such as oxygen-free copper or a copper alloy. The active material layers 12 are produced by using, for example, an active material such as a carbon-based material or lithium titanium oxide.

As illustrated in FIG. 5, formed on the surface Wa of the metal foil 10B formed as the electrode of a battery are: a covered site Pc where the metal layer 11 is covered by the active material layers 12, i.e., the coating; and an exposed site Pe where the metal layer 11 is exposed without being covered by the active material layers 12. By scanning the surface Wa of the metal foil 10B with the laser light L on a prescribed scanning path Pt, the laser cutting apparatus 100 is capable of continuously cutting both the covered site Pc and the exposed site Pe.

[Laser Cutting Method]

In the laser cutting process using the laser cutting apparatus 100, to begin with, the workpiece W is set so that the surface Wa thereof is irradiated with the laser light L. Further, while the surface Wa is being irradiated with the laser light L, the laser light L and the workpiece W make a relative movement. As a result, while having the surface Wa irradiated, the laser light L moves over (scans) the surface Wa in the scanning direction SD. The part irradiated with the laser light L is melted and cut.

[Intermittent Irradiation]

In the laser cutting process of the metal foil 10 as described above, when the laser light L is applied to the metal foil 10 with a high intensity, an end edge 10a resulting from the cut may curl or peel off. However, if the output of the laser light L is reduced, the laser cutting process takes more time. To cope with the circumstances, the inventors conducted an intensive study and learned that, when the workpiece W is the metal foil 10, it is possible to realize processing with higher quality in shorter processing time, by intermittently (discontinuously) irradiating the surface Wa with the laser light L at a prescribed frequency. From this viewpoint, the inventors empirically discovered that it is desirable when the frequency of a pulse of the laser light L is 500 [kHz] or less. Further, when the energy of the laser light L per unit area, i.e., an energy density, is low, it becomes difficult to achieve a desirable cut state. From this viewpoint, it became clear that the diameter (a spot diameter) of a spot of the laser light L is preferably 100 [$\mu$m] or less, and more preferably 50 [$\mu$m] or less, and even more preferably 30 [$\mu$m] or less.

FIG. 6 is a chart illustrating a schematic time waveform of a pulse of the laser light being output by the laser apparatus 110. In FIG. 6, the horizontal axis expresses time, whereas the vertical axis expresses outputs of the laser light from the laser apparatus 110. For the intermittent irradiation, it is possible to express a duty ratio Dr as Dr = (Tp/Tc) $\times$ 100 [%], where Tp denotes an emission period (a pulse width) of each pulse, whereas Tc denotes a pulse cycle. Further, the frequency of the pulse can be expressed as 1/Tc.

[Overlapping Ratio]

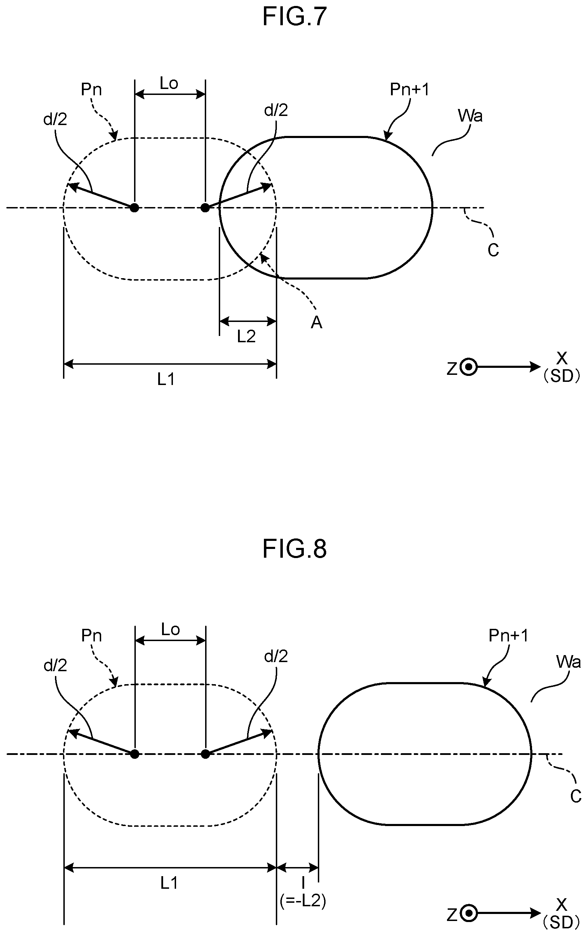

Further, from an empirical study, the inventors discovered that cutting quality is affected by an overlapping state of irradiation ranges, on the surface Wa, of two consecutive pulses at a time interval. FIG. 7 is a plan view illustrating a state in which irradiation ranges of two temporally-consecutive pulses partially overlap with each other on the surface Wa. FIG. 8 is a plan view illustrating a state in which irradiation ranges of two temporally-consecutive pulses are, on the surface Wa, positioned apart from each other without overlapping.

An overlapping ratio R shall be defined as in Expression (1) presented below:

$$R = L2/L1 \tag{1}$$

where L1 denotes the length of an irradiation region Pn of an n-th pulse of the laser light L and of an irradiation region Pn+1 of an (n+1)-th pulse of the laser light L that is measured along the scanning direction SD on a centerline C in the width direction of a scanning trajectory. L1 has the same value for the two irradiation regions Pn and Pn+1, while n is a positive number. It is possible to express L1 by using Expression (2) presented below:

$$L1 = Lo + d \tag{2}$$

where Lo denotes a moving distance of a spot of the laser light L over the surface Wa during the emission period Tp (see FIG. 6) of the pulse in the scan; and d denotes the diameter of the spot (a spot diameter) of the laser light L on the surface Wa.

Further, L2 denotes a length indicating an overlapping state of the irradiation region Pn and the irradiation region Pn+1. As illustrated in FIG. 7, when the irradiation region Pn and the irradiation region Pn+1 overlap with each other, L2 denotes the length of an overlapping region A between the irradiation region Pn and the irradiation region Pn+1 that is measured along the scanning direction SD on the centerline C. In this situation, L2 > 0 is true. Although not illustrated, when the irradiation region Pn and the irradiation region Pn+1 touch each other in the scanning direction SD, L2 = 0 is true. Further, as illustrated in FIG. 8, when the irradiation region Pn and the irradiation region Pn+1 are positioned apart from each other by a distance I (> 0) in the scanning direction SD, let L2 = -I. In that situation L2 < 0 is true.

For a typical laser cutting apparatus capable of executing processes of the present embodiment, energy per pulse may be set, for example, to be 2 [mJ] or more and 100 [mJ] or less, whereas the pulse width (the emission period Tp) may be set to 2 [$\mu$s] or larger, and a pulse frequency (1/Tc) may be set to 500 [kHz] or less.

Further, in an example using the typical laser cutting apparatus with a scanning speed of 2 [m/s] or higher, while the pulse frequency is 100 [kHz], and the duty ratio (Dr) is 50 [%], the overlapping ratio (R) can be calculated as 35.5 [%].

[Characteristics of Pulses]

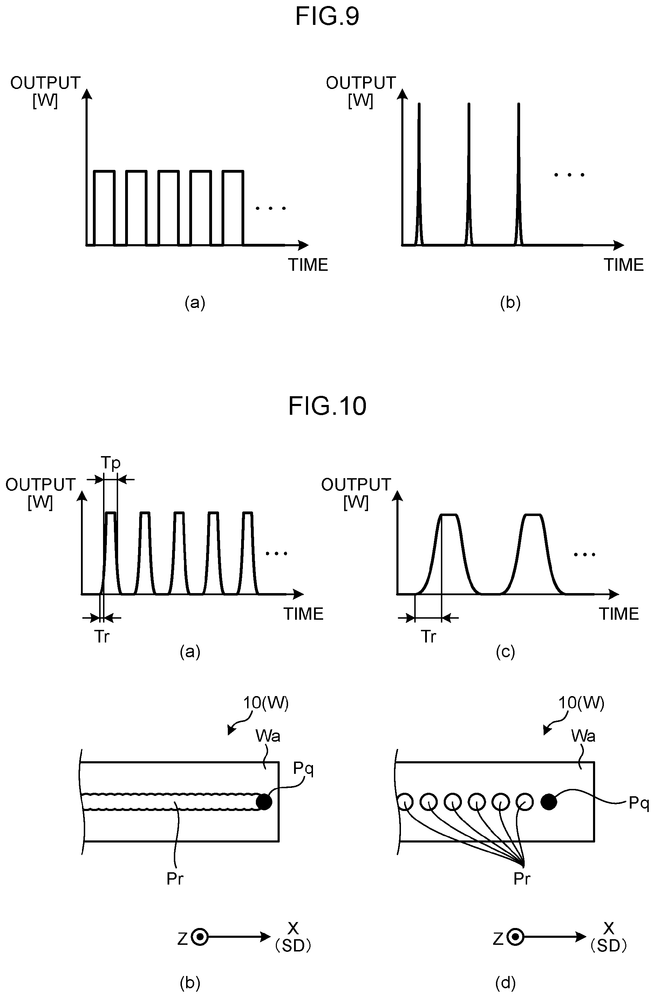

FIG. 9 presents schematic charts of an example (FIG. 9(a)) of a time waveform of an output of the light source of the laser cutting apparatus according to the embodiment and an example (FIG. 9(b)) of a time waveform of an output of a pulse laser light source such as a mode-locked laser. In the time waveform illustrated in FIG. 9(b), the energy per pulse is relatively small, being 0.1 [mJ] or more and 1.6 [mJ] or less. In contrast, in the time waveform illustrated in FIG. 9(a), the energy per pulse is relatively large, being 2 [mJ] or more and 100 [mJ] or less. The inventors conducted an intensive study and learned that it is possible to realize processing with higher quality in shorter processing time, by having the energy per pulse of 2 [mJ] or more and 100 [mJ] or less. For example, when the energy per pulse is 2 [mJ] or more and 100 [mJ] or less, it is possible to properly cut a metal foil by performing a scan once at a high scanning speed such as 2 [m/s] or higher. To improve work efficiency, a scanning speed equal to or higher than 2 [m/s] is desirable as a scanning speed for cutting a metal foil forming a positive electrode of a battery, for example.

FIG. 10 presents schematic charts illustrating an example (FIG. 10(a)) of a time waveform of an output of the light source of the laser cutting apparatus according to the embodiment and an irradiation state thereof (FIG. 10(b)), together with an example (FIG. 10(c)) of a time waveform of an output of a light source of a laser cutting apparatus having relatively greater rise time and pulse width and an irradiation state thereof (FIG. 10(d)). In the waveform illustrated in FIG. 10(c), the rise time Tr is longer than 10 [μs]. Also, the pulse width is large being 10 [μs] or larger. When the rise time Tr is long like in the present example, an adjustable range for the overlapping ratio R is small, for the reason that pulse repetition frequency cannot be increased so much (e.g., 50 [kHz] or less) or the like. The adjustable range for the overlapping ratio R with the time waveform illustrated in FIG. 10(c) is, for example, the range from -100 [%] to 2.5 [%]. FIG. 10(d) illustrates the irradiation state of the laser light on the surface Wa of the metal foil 10A serving as a workpiece W, when the time waveform illustrated in FIG. 10(c) is used. The irradiation region Pq denotes an irradiation region at present, whereas the irradiation regions pr denote irradiation regions until the irradiation region Pq is reached. FIG. 10(d) illustrates an example in which the overlapping ratio R is negative.

In contrast, in the time waveform of the output of the light source of the laser cutting apparatus according to the embodiment illustrated in FIG. 10(a), the rise time Tr of the pulse is 2 [μs] or shorter. The inventors conducted an intensive study and learned that it is possible to widen the adjustable range for the overlapping ratio R by ensuring that the rise time Tr is 2 [μs] or shorter, for the reason that it is possible to make the pulse repetition frequency relatively high (e.g., 500 [kHz] or less), or the like. The adjustable range for the overlapping ratio R with the waveform illustrated in FIG. 10(a) is, for example, the range from -100 [%] to 99 [%]. With the capability to adjust the overlapping ratio R in the wider range in this manner, it is possible to realize more finely-tuned control on heat inputs to the metal foil 10A. Further, by realizing the more finely-tuned control on the heat inputs, it is possible to perform the processing with higher quality. FIG. 10(b) illustrates an irradiation state of the laser light on the surface Wa of the metal foil 10A when the time waveform illustrated in FIG. 10(a) is used. FIG. 10(b) illustrates an example in which the overlapping ratio R is positive.

Although not particularly limited, a lower limit of the rise time Tr may be, for example, 0.5 [μs]. Further, a pulse width (the emission period Tp) of 2 [μs] or larger is desirable for the ease of the laser emission. Although not particularly limited, an upper limit of the pulse width may be, for example, 10 [μs]. In addition, similarly to the rise time Tr, it is also desirable to have pulse fall time of 2 [μs] or shorter.

[Spot Diameter]

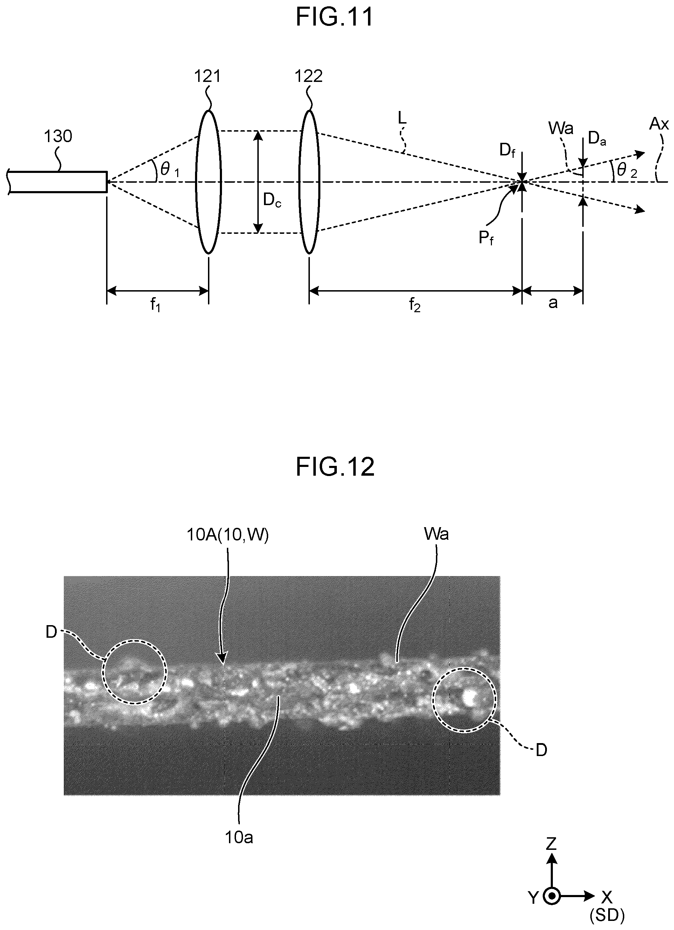

FIG. 11 is a diagram for explaining a definition of the spot diameter. In FIG. 11, Ax denotes an optical axis; $f_1$ denotes a focal point distance of the collimate lens 121; $f_2$ denotes a focal point distance of the condenser lens 122; $\theta_1$ denotes a beam diffusion angle; $\theta_2$ denotes a beam divergence angle; $D_c$ denotes a beam diameter of the collimate light; $D_f$ denotes a beam diameter at a focal point position $P_s$; $D_a$ denotes a beam diameter (a spot diameter) on the surface Wa in a defocus position; and "a" denotes the distance between the focal point position $P_f$ and the surface Wa. The spot diameter $D_a$ may be referred to as a theoretical spot diameter. In this situation, Expressions (3) to (5) presented below are true:

$$D_c = 2\theta_1 f_1 \qquad\qquad (3);$$

$$D_f = (4 f_2/\pi D_c) M^2 \lambda \qquad\qquad (4);$$

and

$$D_a = D_f \sqrt{\{1 + (4 a\lambda/\pi D_f^2)^2\}} \qquad\qquad (5)$$

where $M^2$ denotes beam quality, whereas $\lambda$ denotes a wavelength.

In the laser cutting process according to the present embodiment, functional units of the laser cutting apparatus 100 are configured, adjusted, or controlled so that the spot diameter $D_a$ on the surface Wa has a prescribed value. Through an intensive study of the inventors, it was discovered that a spot diameter $D_a$ of 28 [μm] or less is preferable for the capability to reduce thermal effects, and 21 [μm] or less is even more preferable. In an example, when the beam quality $M^2$ of the laser light is smaller than 1.1, while the core diameter of the optical fiber 130 is 14 [μm], and the wavelength of the laser light is 1070 [nm], it is possible to set the spot diameter $D_a$ to 21 [μm] while the optical head 120 having a magnification ratio of 1.5x is used.

[Evaluating Quality of End Edge]

As a result of an intensive study on laser cutting the metal foil 10 serving as an electrode (a positive electrode or a negative electrode) with the intermittent irradiation of the laser light L, the inventors discovered that it is possible to further enhance the quality in the vicinity of the end edge 10a, by setting an appropriate irradiation condition of the laser light L, so as to avoid various inconvenient events that may occur in the vicinity of the end edge 10a of the metal foil 10 cut by the laser light L.

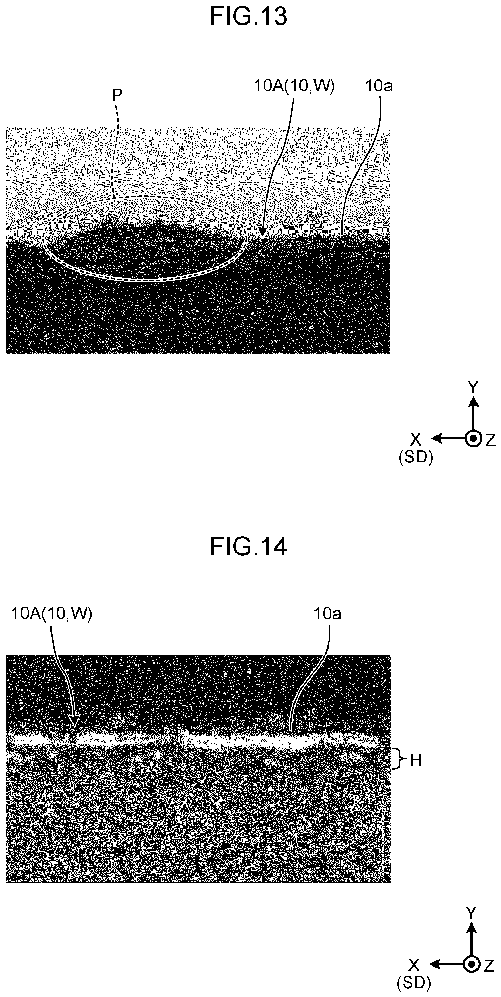

FIG. 12 is a front view of the end edge 10a that has been cut of the metal foil 10A (10) forming a positive electrode, as viewed in a direction (the direction opposite to the Y direction) orthogonal to the thickness direction (the Z direction) of the metal foil 10A and to the scanning direction SD. FIG. 13 is a plan view of an example of the end edge 10a, as viewed in the thickness direction (the direction opposite to the Z direction). FIG. 14 is a plan view of an end edge 10a of a sample different from that in FIG. 13, as viewed in the thickness direction (the direction opposite to the Z direction).

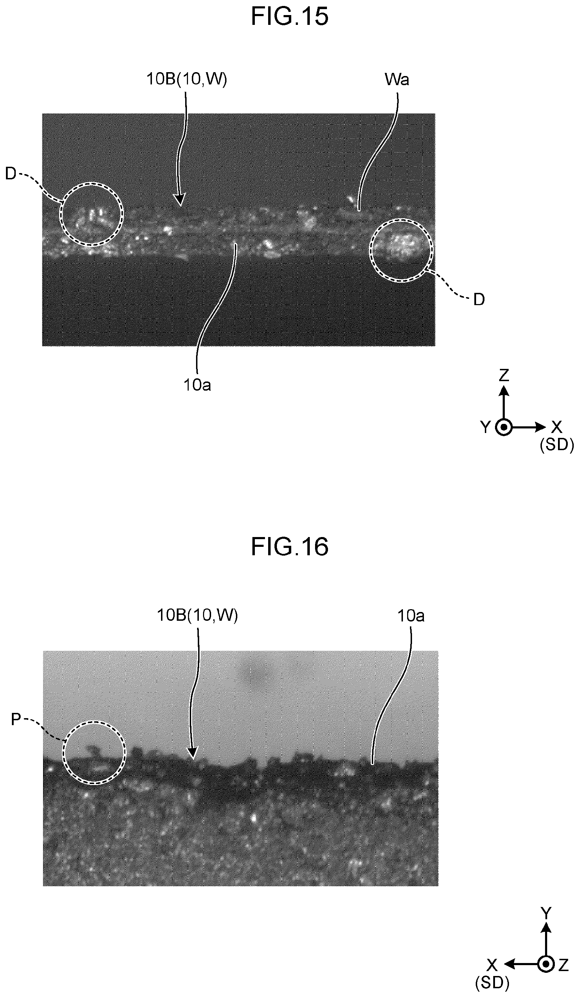

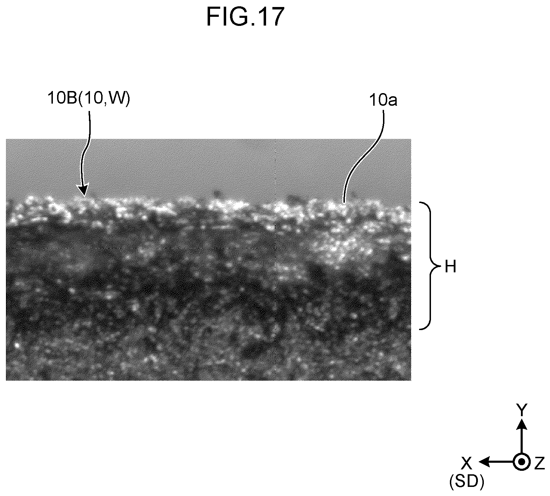

Further, FIG. 15 is a front view of an end edge 10a that has been cut of the metal foil 10B (10) forming a negative electrode, as viewed in a direction (the direction opposite to the Y direction) orthogonal to the thickness direction (the Z direction) of the metal foil 10B and to the scanning direction SD. FIG. 16 is a plan view of an example of the end edge 10a, as viewed in the thickness direction (the direction opposite to the Z direction). FIG. 17 is a plan view of an end edge 10a of a sample different from that in FIG. 16, as viewed in the thickness direction (the direction opposite to the Z direction).

At the end edge 10a of the metal foil 10, protrusions D such as dross (a mass), for example, bulging in the thickness direction (the Z direction) of the metal foil 10 may occur, as illustrated in FIGS. 12 and 15. Further, at the end edge 10a, protrusions P such as a burr, for example, projecting from the end edge 10a in a direction along the surface Wa may occur as illustrated in FIGS. 13 and 16. Furthermore, at the end edge 10a, a discoloration region H extending along the end edge 10a with a certain width may occur, as illustrated in FIGS. 14 and 17.

[Processing a Positive Electrode]

[Aluminum Foil (Uncoated): Protrusions in Thickness Direction]

We performed an experiment on an uncoated aluminum foil (A1050 having a thickness of 20 [μm]) serving as the metal layer 11 that is not covered by the active material layers 12 or the insulation layers 13, i.e., the coatings. The preferable processing conditions obtained from the results of the experiment performed on the uncoated aluminum foil are applicable to a laser cutting process performed in the exposed site Pe.

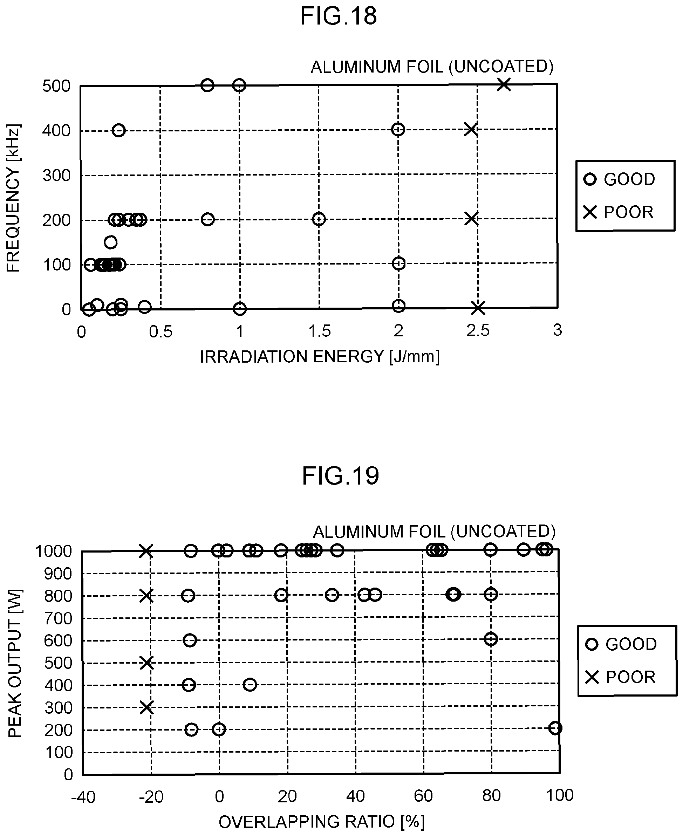

From the experiment, it became clear that, as for the protrusions D (see FIG. 12) in the thickness direction (the Z direction) at the end edge 10a, the height thereof varies depending on irradiation energy of the laser light L and the frequency of the pulse. FIG. 18 is a chart illustrating an example of evaluation results on the irradiation energy of the laser light L and frequencies of the pulse, with regard to the height of the protrusions D in the thickness direction at the end edge 10a observed when the uncoated aluminum foil was cut. The energy of the laser light L per pulse was in the range of 2 to 50 [mJ]. The rise time Tr was in the range of 0.5 to 2 [μs]. Further, the frequency being 0 (kHz) denotes a state in which the laser light L was continuously emitted.

The irradiation energy E [J/mm] denotes the energy with which a unit length of the surface Wa is irradiated and can be expressed by using Expression (6) presented below:

$$E = Pp \times Dr / (100 \times v) \tag{6}$$

where Pp denotes a peak output [W], whereas Dr denotes a duty ratio [%], and v denotes a scanning speed [mm/s]. The state in which the frequency of the pulse was 0 indicates a state in which the laser light was emitted continuously, and not intermittently.

In FIG. 18, the circles ○ ("GOOD") represent the situations where the height (hereinafter, "first height") of the protrusions D from the surface Wa along the Z direction was 20 [μm] or smaller, whereas the crosses × ("POOR") represent the situations where the first height was larger than 20 [μm].

As illustrated in FIG. 18, it became clear that desirable frequencies were 500 [kHz] or less, whereas desirable irradiation energy was 0.05 [J/mm] or more and 2.0 [J/mm] or less. We consider the reason is that the protrusions D occur when the amount of applied energy exceeds a prescribed level.

Table 1 is a table indicating numerical values at the data points in FIG. 18.

Table 1

| GOOD | | GOOD | | POOR | |
|---|---|---|---|---|---|
| IRRADIATION ENERGY [J/mm] | FREQUENCY [kHz] | IRRADIATION ENERGY [J/mm] | FREQUENCY [kHz] | IRRADIATION ENERGY [J/mm] | FREQUENCY [kHz] |
| 1.5 | 200 | 0.213333 | 200 | 2.461538 | 200 |
| 0.3 | 200 | 0.24 | 100 | 2.461538 | 400 |
| 0.8 | 200 | 0.24 | 200 | 2.666667 | 500 |
| 1 | 0 | 0.2 | 100 | | |
| 0.15 | 100 | 0.2125 | 100 | | |
| 0.06 | 100 | 0.2 | 100 | | |
| 0.25 | 10 | 0.1875 | 150 | | |
| 0.1 | 10 | 0.125 | 100 | | |
| 2 | 5 | 0.15 | 100 | | |
| 0.4 | 5 | 0.14 | 100 | | |
| 0.25 | 0 | 0.35 | 200 | | |
| 0.05 | 0 | 0.20625 | 100 | | |
| 0.2 | 0 | 0.3 | 200 | | |
| 0.2 | 100 | 0.375 | 200 | | |
| 0.175 | 100 | 2 | 100 | | |
| 0.15 | 100 | 0.24 | 400 | | |
| 0.175 | 100 | 0.8 | 500 | | |
| 0.18 | 100 | 2 | 400 | | |
| 0.186667 | 100 | 1 | 500 | | |

[Aluminum Foil (Uncoated): Protrusions in Direction Along Surface]

From the experiment, it became clear that, as for the protrusions P (see FIG. 13) at the end edge 10a in the direction (the Y direction) along the surface Wa, the height thereof varies depending on the overlapping ratio and the peak output of the pulse (Pp, see FIG. 6). FIG. 19 is a chart illustrating an example of evaluation results on overlapping ratios and peak outputs, with regard to the height of the protrusions P in the direction along the surface Wa at the end edge 10a observed when an uncoated aluminum foil was cut. The energy of the laser light L per pulse was in the range of 2 to 80 [mJ]. The rise time Tr was in the range of 0.5 to 2 [μs]. Further, the overlapping ratio being 100 [%] denotes a state in which the laser light L was continuously emitted.

In FIG. 19, the circles ○ ("GOOD") represent the situations where the height (hereinafter, "second height") of the protrusions P from the end edge 10a along the Y direction was 30 [μm] or smaller, whereas the crosses × ("POOR") represent the situations where the second height was larger than 30 [μm].

As illustrated in FIG. 19, it became clear that desirable peak outputs were 200 [W] or more and 1000 [W] or less, whereas desirable overlapping ratios were -9 [%] or more. We consider that the reason is as follows: The more regions are not irradiated with the laser light L due to a low overlapping ratio, the more easily the protrusions P occur. The larger the peak output is, the larger is a kerf width (a cut width) and the less easily the protrusions P occur.

Table 2 is a table indicating numerical values at the data points in FIG. 19.

Table 2

| GOOD | | GOOD | | POOR | |
|---|---|---|---|---|---|
| OVERLAPPING RATIO [%] | PEAK OUTPUT [W] | OVERLAPPING RATIO [%] | PEAK OUTPUT [W] | OVERLAPPING RATIO [%] | PEAK OUTPUT [W] |
| 0 | 1000 | 27.27273 | 1000 | -21.2121 | 1000 |
| 0 | 200 | 24.5283 | 1000 | -21.2121 | 500 |
| 9.090909 | 1000 | 27.27273 | 1000 | -21.2121 | 800 |
| 9.090909 | 400 | 2.439024 | 1000 | -21.2121 | 300 |
| -8.108108 | 1000 | 34.95935 | 1000 | | |
| -8.108108 | 200 | 11.11111 | 1000 | | |
| 0 | 1000 | 18.36735 | 800 | | |
| 0 | 200 | 64.28571 | 1000 | | |
| 98.86621 | 200 | 64.28571 | 1000 | | |
| 89.71722 | 1000 | 25.92593 | 1000 | | |
| 98.41552 | 1000 | 65.51724 | 1000 | | |
| 0 | 1000 | 62.96296 | 1000 | | |
| 24.5283 | 1000 | 95.28302 | 1000 | | |
| 18.36735 | 1000 | 80 | 600 | | |
| 28.57143 | 1000 | 80 | 800 | | |
| 33.33333 | 800 | 80 | 1000 | | |
| 42.85714 | 800 | 80 | 600 | | |
| 68.75 | 800 | -9 | 800 | | |
| 45.94595 | 800 | -8.5 | 600 | | |
| 69.23077 | 800 | -8.9 | 400 | | |
| 24.5283 | 1000 | | | | |

[Aluminum Foil (Uncoated): Discoloration Region]

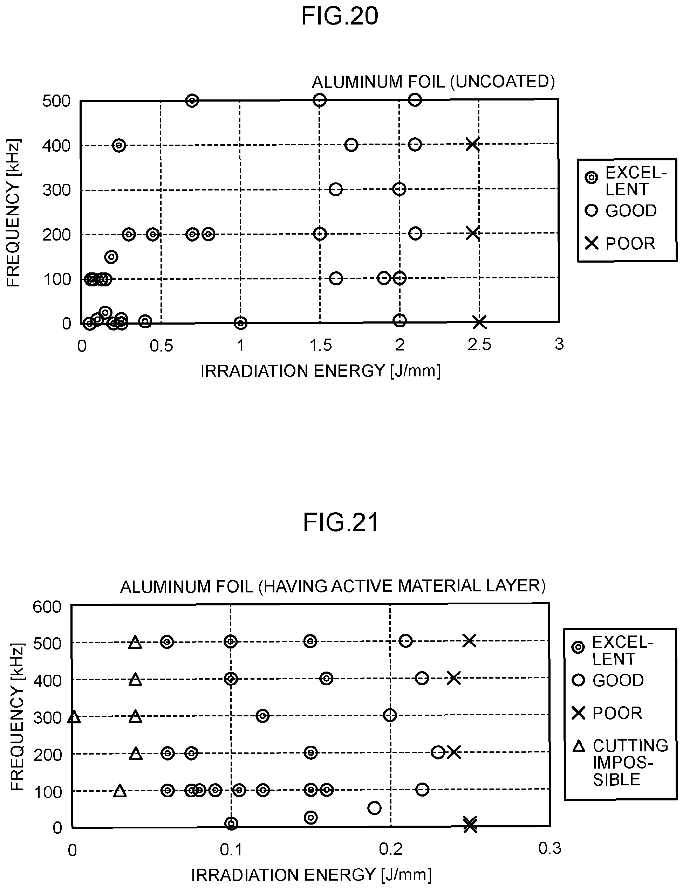

As for the discoloration region H (see FIG. 14) extending along the end edge 10a to have a certain width, it became clear from the experiment that the dimension of the width thereof varies depending on the irradiation energy of the laser light L and the frequency of the pulse. FIG. 20 is a chart illustrating an example of evaluation results on the irradiation energy of the laser light L and frequencies of the pulse, with regard to the width of the discoloration region H at the end edge 10a observed when an uncoated aluminum foil was cut. The discoloration region H was a region in the vicinity of the end edge 10a where brightness levels in a captured image were 250% or more as compared to a general region. In this situation, the general region refers to a region that had little impact from the cutting of the metal foil 10A subject to the cutting process using the laser light L. For example, the general region may be a site distant from the end edge 10a by 1000 [μm] or longer. The energy of the laser light L per pulse was in the range of 2 to 50 [mJ]. The rise time Tr was in the range of 0.5 to 2 [μs].

In FIG. 20, the double circles ⊚ ("EXCELLENT") represent the situations where the width of the discoloration region H along the Y direction was 20 [μm] or less. The circles ○ ("GOOD") represent the situations where the width of the discoloration region H was more than 20 [μm] and 50 [μm] or less. The crosses × ("POOR") represent the situations where the width of the discoloration region H was larger than 50 [μm].

As illustrated in FIG. 20, it became clear that desirable frequencies were 500 [kHz] or less, that preferable irradiation energy ("GOOD" and "EXCELLENT") was 0.05 [J/mm] or more and 2.1 [J/mm] or less, and that even more preferable irradiation energy ("EXCELLENT") was 0.05 [J/mm] or more and 1.0 [J/mm] or less. We consider the reason is that the discoloration by thermal effects is caused more easily, when the amount of applied energy exceeds a prescribed level.

Table 3 is a table indicating numerical values at the data points in FIG. 20.

Table 3

| EXCELLENT | | GOOD | | POOR | |
|---|---|---|---|---|---|
| IRRADIATION ENERGY [J/mm] | FREQUENCY [kHz] | IRRADIATION ENERGY [J/mm] | FREQUENCY [kHz] | IRRADIATION ENERGY [J/mm] | FREQUENCY [kHz] |
| 0.3 | 200 | 1.5 | 200 | 0 | 2.5 |
| 0.8 | 200 | 2 | 5 | 200 | 2.461538 |
| 1 | 0 | 2 | 100 | 400 | 2.461538 |
| 0.15 | 100 | 1.5 | 200 | | |
| 0.06 | 100 | 1.6 | 300 | | |
| 0.075 | 100 | 1.7 | 400 | | |
| 0.25 | 10 | 1.6 | 100 | | |
| 0.1 | 10 | 2.1 | 200 | | |
| 0.4 | 5 | 2 | 300 | | |
| 0.25 | 0 | 2.1 | 400 | | |
| 0.05 | 0 | 1.9 | 100 | | |
| 0.7 | 200 | 2.1 | 500 | | |
| 0.7 | 500 | 1.5 | 500 | | |
| 0.7 | 200 | | | | |
| 0.15 | 25 | | | | |
| 0.45 | 200 | | | | |
| 0.2 | 0 | | | | |
| 0.1875 | 150 | | | | |
| 0.125 | 100 | | | | |
| 0.24 | 400 | | | | |

[Aluminum Foil (Having Active Material Layers): Protrusions in Thickness Direction]

We performed the same experiment as that performed on the uncoated aluminum foil, also on an aluminum foil (having a thickness of 150 [μm]) having active material layers and obtained by covering both the front and the rear sides of the metal layer 11 (an aluminum foil) with the active material layers 12 produced by using iron phosphate (LiFePO$_4$). The preferable processing conditions obtained from the results of the experiment performed on the aluminum foil having the active material layers are applicable to a laser cutting process performed in the covered site Pc1.

FIG. 21 is a chart illustrating an example of evaluation results on irradiation energy of the laser light L and frequencies of the pulse, with regard to the height of the protrusions D in the thickness direction at the end edge 10a observed when the aluminum foil having the active material layers was cut. The energy of the laser light L per pulse was in the range of 2 to 10 [mJ]. The rise time Tr was in the range of 0.5 to 2 [μs]. In FIG. 21, the double circles ◎ ("EXCELLENT") represent the situations where the height of the protrusions D from the surface Wa in the Z direction was 10 [μm] or smaller, whereas the circles ○ ("GOOD") represent the situations where the first height was larger than 10 [μm] and 20 [μm] or smaller, and the crosses × ("POOR") represent the situations where the first height was larger than 20 [μm]. The triangles △ ("CUTTING IMPOSSIBLE") represent the situations where the cutting was impossible.

As illustrated in FIG. 21, it became clear that desirable frequencies were 500 [kHz] or less, that preferable irradiation energy ("GOOD" and "EXCELLENT") was 0.06 [J/mm] or more and 0.23 [J/mm] or less, and that even more preferable irradiation energy ("EXCELLENT") was 0.06 [J/mm] or more and 0.16 [J/mm] or less.

Table 4 is a table indicating numerical values at the data points in FIG. 21.

Table 4

| EXCELLENT | | GOOD | | POOR | | CUTTING IMPOSSIBLE | |
|---|---|---|---|---|---|---|---|
| IRRADIATION ENERGY [J/mm] | FREQUENCY [kHz] | IRRADIATION ENERGY [J/mm] | FREQUENCY [kHz] | IRRADIATION ENERGY [J/mm] | FREQUENCY [kHz] | IRRADIATION ENERGY [J/mm] | FREQUENCY [kHz] |
| 0.06 | 500 | 0.21 | 500 | 0.25 | 500 | 0.04 | 500 |
| 0.1 | 500 | 0.22 | 400 | 0.24 | 400 | 0.04 | 400 |
| 0.15 | 500 | 0.2 | 300 | 0.24 | 200 | 0.04 | 300 |
| 0.1 | 400 | 0.23 | 200 | 0.25 | 10 | 0.001425 | 300 |
| 0.16 | 400 | 0.22 | 100 | 0.25 | 0 | 0.04 | 200 |
| 0.12 | 300 | 0.19 | 50 | | | 0.03 | 100 |
| 0.06 | 200 | | | | | | |
| 0.075 | 200 | | | | | | |
| 0.15 | 200 | | | | | | |
| 0.06 | 100 | | | | | | |
| 0.075 | 100 | | | | | | |
| 0.08 | 100 | | | | | | |
| 0.09 | 100 | | | | | | |
| 0.105 | 100 | | | | | | |
| 0.12 | 100 | | | | | | |
| 0.15 | 100 | | | | | | |
| 0.16 | 100 | | | | | | |
| 0.1 | 10 | | | | | | |
| 0.15 | 25 | | | | | | |

[Aluminum Foil (Having Active Material Layers): Protrusions in Direction Along Surface]

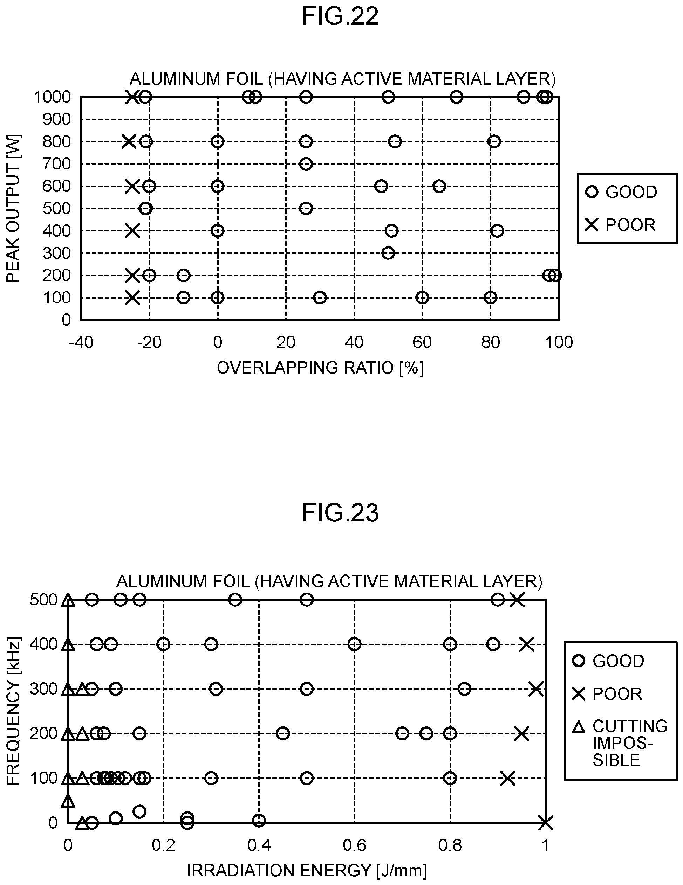

FIG. 22 is a chart illustrating an example of evaluation results on overlapping ratios and peak outputs, with regard to the height of the protrusions P in the direction along the surface Wa at the end edge 10a observed when the aluminum foil having the active material layers was cut. The energy of the laser light L per pulse was in the range of 2 to 30 [mJ]. The rise time Tr was in the range of 0.5 to 2 [$\mu$s]. The standards used for judging the height of the protrusions P were the same as those used for the uncoated aluminum foil.

As illustrated in FIG. 22, it became clear that desirable peak outputs were 100 [W] or more and 1000 [W] or less, whereas desirable overlapping ratios were -21 [%] or more.

Table 5 is a table indicating numerical values at the data points in FIG. 22.

Table 5

| GOOD | | GOOD | |
|---|---|---|---|
| OVERLAPPING RATIO [%] | PEAK OUTPUT [W] | OVERLAPPING RATIO [%] | PEAK OUTPUT [W] |
| -21.2121 | 1000 | -25 | 1000 |
| 9.090909 | 1000 | -26.0838 | 800 |
| 11.11111 | 1000 | -25.081 | 600 |
| 25.92592 | 1000 | -25.088 | 400 |
| 51.3909 | 1000 | -25.0001 | 200 |
| 70.08378 | 1000 | -25.0101 | 100 |
| 89.71712 | 1000 | | |
| 95.30516 | 1000 | | |
| 96.41552 | 1000 | | |
| -21.0384 | 800 | | |
| 0 | 800 | | |
| 25.9259 | 800 | | |
| 52.0898 | 800 | | |
| 81.03834 | 800 | | |
| 20.0938 | 600 | | |
| 0 | 600 | | |
| 48 | 600 | | |
| 65.8398 | 600 | | |
| 0.0000 | 500 | | |
| 25.9259 | 500 | | |
| 0 | 400 | | |
| 51 | 400 | | |
| 82 | 400 | | |
| 50.3898 | 300 | | |
| -20 | 20 | | |
| -10.888 | 200 | | |
| 97.19888 | 200 | | |
| 98.86621 | 200 | | |
| -10.0388 | 100 | | |
| 0 | 100 | | |

(continued)

| GOOD | | GOOD | |
|---|---|---|---|
| OVERLAPPING RATIO [%] | PEAK OUTPUT [W] | OVERLAPPING RATIO [%] | PEAK OUTPUT [W] |
| 30.0878 | 100 | | |
| 60.08778 | 100 | | |
| 80.08883 | 100 | | |

[Aluminum Foil (Having Active Material Layers): Discoloration Region]

FIG. 23 is a chart illustrating an example of evaluation results on the irradiation energy of the laser light L and frequencies of the pulse, with regard to the width of the discoloration region H at the end edge 10a observed when the aluminum foil having the active material layers was cut. The energy of the laser light L per pulse was in the range of 2 to 10 [mJ]. The rise time Tr was in the range of 0.5 to 2 [$\mu$s]. The discoloration region H was a region in the vicinity of the end edge 10a where brightness levels in a captured image were 80% or less as compared to a general region. In this situation, the general region refers to a region that had little impact from the cutting of the metal foil 10A subject to the cutting process using the laser light L. For example, the general region may be a site distant from the end edge 10a by 1000 [$\mu$m] or longer.

In FIG. 23, the circles ○ ("GOOD") represent the situations where the width of the discoloration region H was 50 [$\mu$m] or less, whereas the crosses ✕ ("POOR") represent the situations where the width of the discoloration region H was more than 50 [$\mu$m]. Further, the triangles △ ("CUTTING IMPOSSIBLE") represent the situation where the cutting was impossible.

As illustrated in FIG. 23, it became clear that desirable frequencies were 500 [kHz] or less and that desirable irradiation energy was 0.05 [J/mm] or more and 0.9 [J/mm] or less.

Table 6 is a table indicating numerical values at the data points in FIG. 23.

Table 6

| EXCELLENT | | GOOD | | POOR | | CUTTING IMPOSSIBLE | |
|---|---|---|---|---|---|---|---|
| IRRADIATION ENERGY [J/mm] | FREQUENCY [kHz] | IRRADIATION ENERGY [J/mm] | FREQUENCY [kHz] | IRRADIATION ENERGY [J/mm] | FREQUENCY [kHz] | IRRADIATION ENERGY [J/mm] | FREQUENCY [kHz] |
| 0.05 | 500 | 0.7 | 200 | 0.94 | 500 | 0 | 500 |
| 0.11 | 500 | 0.75 | 200 | 0.96 | 400 | 0 | 400 |
| 0.15 | 500 | 0.8 | 200 | 0.98 | 300 | 0 | 300 |
| 0.35 | 500 | 0.06 | 100 | 0.95 | 200 | 0 | 200 |
| 0.5 | 500 | 0.075 | 100 | 0.92 | 100 | 0 | 100 |
| 0.9 | 500 | 0.08 | 100 | 1 | 0 | 0 | 50 |
| 0.06 | 400 | 0.09 | 100 | | | 0.03 | 300 |
| 0.09 | 400 | 0.105 | 100 | | | 0.03 | 200 |
| 0.2 | 400 | 0.12 | 100 | | | 0.03 | 100 |
| 0.3 | 400 | 0.15 | 100 | | | 0.03 | 0 |
| 0.6 | 400 | 0.16 | 100 | | | | |
| 0.8 | 400 | 0.3 | 100 | | | | |
| 0.89 | 400 | 0.5 | 100 | | | | |
| 0.05 | 300 | 0.8 | 100 | | | | |
| 0.1 | 300 | 0.15 | 25 | | | | |
| 0.31 | 300 | 0.25 | 10 | | | | |
| 0.5 | 300 | 0.4 | 5 | | | | |
| 0.83 | 300 | 0.1 | 10 | | | | |
| 0.06 | 200 | 0.05 | 10 | | | | |
| 0.075 | 200 | 0.25 | 0 | | | | |
| 0.15 | 200 | 0.4 | 5 | | | | |
| 0.45 | 200 | | | | | | |

[Aluminum Foil (Having Ceramic Insulation Layers): Protrusions in Thickness Direction]

We performed the same experiment as that performed on the uncoated aluminum foil, also on an aluminum foil (having a thickness of 130 [μm]) having ceramic insulation layers and obtained by covering both the front and the rear sides of the metal layer 11 (an aluminum foil) with the insulation layers 13 produced by using ceramics such as alumina-based ceramics. The preferable processing conditions obtained from the results of the experiment performed on the aluminum foil having the ceramic insulation layers are applicable to a laser cutting process performed in the covered site Pc2.

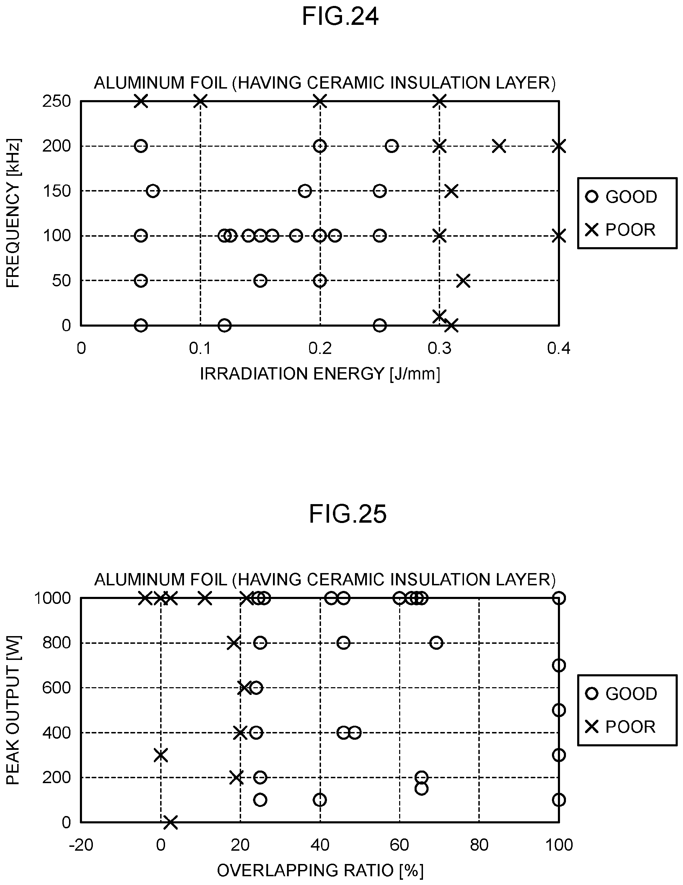

FIG. 24 is a chart illustrating an example of evaluation results on the irradiation energy of the laser light L and frequencies of the pulse, with regard to the height of the protrusions D in the thickness direction at the end edge 10a observed when the aluminum foil having the ceramic insulation layers was cut. The energy of the laser light L per pulse was in the range of 2 to 50 [mJ]. The rise time Tr was in the range of 0.5 to 2 [μs]. The standards used for judging the height of the protrusions D were the same as those used for the uncoated aluminum foil.

As illustrated in FIG. 24, it became clear that desirable frequencies were 200 [kHz] or less and that desirable irradiation energy was 0.05 [J/mm] or more and 0.26 [J/mm] or less.

Table 7 is a table indicating numerical values at the data points in FIG. 24.

Table 7

| GOOD | | POOR | |
|---|---|---|---|
| IRRADIATION ENERGY [J/mm] | FREQUENCY [kHz] | IRRADIATION ENERGY [J/mm] | FREQUENCY [kHz] |
| 0.25 | 0 | 0.5 | 100 |
| 0.2 | 100 | 0.4 | 200 |
| 0.2125 | 100 | 0.4 | 100 |
| 0.2 | 100 | 0.35 | 200 |
| 0.1875 | 150 | 0.3 | 200 |
| 0.2125 | 100 | 0.31 | 150 |
| 0.125 | 100 | 0.3 | 100 |
| 0.15 | 100 | 0.32 | 50 |
| 0.14 | 100 | 0.3 | 10 |
| 0.2 | 200 | 0.31 | 0 |
| 0.18 | 100 | 0.1 | 250 |
| 0.16 | 100 | 0.2 | 250 |
| 0.16 | 100 | 0.3 | 250 |
| 0.12 | 100 | 0.05 | 250 |
| 0.05 | 0 | | |
| 0.12 | 0 | | |
| 0.05 | 50 | | |
| 0.05 | 100 | | |
| 0.06 | 150 | | |
| 0.05 | 200 | | |
| 0.25 | 150 | | |
| 0.26 | 200 | | |
| 0.15 | 50 | | |
| 0.2 | 50 | | |

[Aluminum Foil (Having Ceramic Insulation Layers): Protrusions in Direction Along Surface]

FIG. 25 is a chart illustrating an example of evaluation results on overlapping ratios and peak outputs, with regard to the height of the protrusions P in the direction along the surface Wa at the end edge 10a observed when the aluminum foil having the ceramic insulation layers was cut. The energy of the laser light L per pulse was in the range of 2 to 30 [mJ]. The rise time Tr was in the range of 0.5 to 2 [μs]. The standards used for judging the height of the protrusions P were the same as those used for the uncoated aluminum foil.

As illustrated in FIG. 25, it became clear that desirable peak outputs were 100 [W] or more and 1000 [W] or less and that desirable overlapping ratios were 24 [%] or more. The reason is that, when the overlapping ratio is low, small ceramic pieces remain in regions that are not irradiated with the laser light L.

Table 8 is a table indicating numerical values at data points in FIG. 25.

Table 8

| GOOD | | POOR | |
|---|---|---|---|
| OVERLAPPING RATIO [%] | PEAK OUTPUT [W] | OVERLAPPING RATIO [%] | PEAK OUTPUT [W] |
| 42.85714 | 1000 | 0 | 1000 |
| 45.94595 | 800 | 21.56862745 | 1000 |
| 69.23077 | 800 | -3.896103896 | 1000 |
| 24.5283 | 1000 | 2.43902439 | 1000 |
| 24.5283 | 1000 | 11.11111111 | 1000 |
| 64.28571 | 1000 | 18.36734694 | 800 |
| 64.28571 | 1000 | 0 | 300 |
| 25.92593 | 1000 | 21.010101 | 600 |
| 60 | 1000 | 20.0877 | 400 |
| 65.51724 | 1000 | 19.0807 | 200 |
| 45.94595 | 1000 | | |
| 64.28571 | 1000 | | |
| 62.96296 | 1000 | | |
| 48.71795 | 400 | | |
| 45.94595 | 400 | | |
| 45.94595 | 400 | | |
| 65.51724 | 200 | | |
| 65.51724 | 150 | | |
| 25.01103 | 800 | | |
| 24.0838 | 600 | | |
| 24.08133 | 400 | | |
| 25.0183 | 200 | | |
| 25.0877 | 100 | | |
| 40.0387 | 100 | | |
| 100 | 100 | | |
| 100 | 300 | | |
| 100 | 500 | | |
| 100 | 700 | | |
| 100 | 1000 | | |

[Aluminum Foil (Having Polymer Insulation Layers): Protrusions in Direction Along Surface]

We performed the same experiment as that performed on the uncoated aluminum foil, also on an aluminum foil (having a thickness of 110 [µm]) having polymer insulation layers and obtained by covering both the front and the rear sides of the metal layer 11 (an aluminum foil) with the insulation layers 13 produced by using a polymer such as ABS resin. The preferable processing conditions obtained from the results of the experiment performed on the aluminum foil having the polymer insulation layers are applicable to a laser cutting process performed in the covered site Pc2.

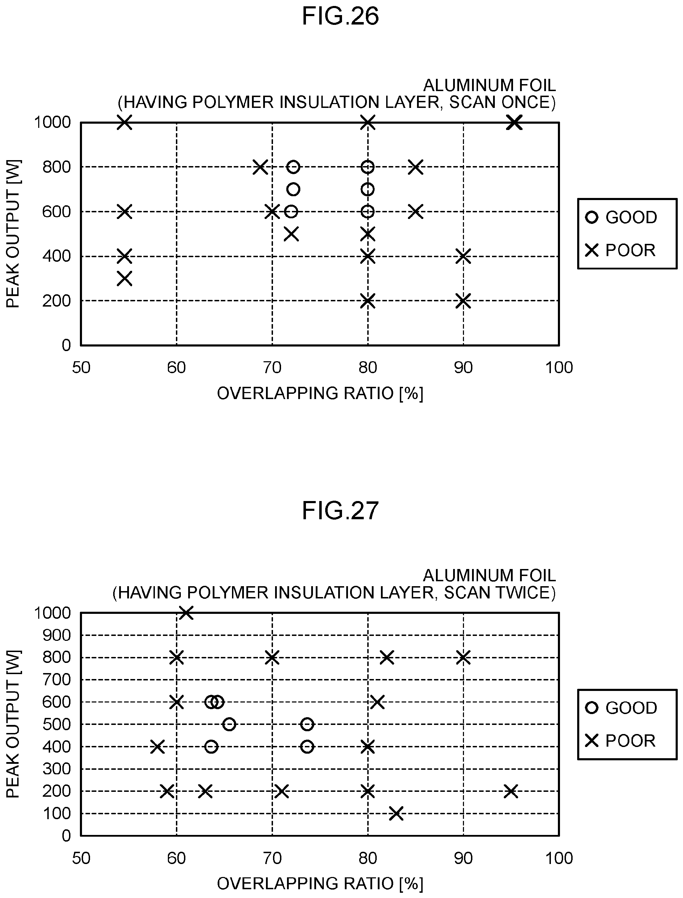

FIGS. 26 and 27 are charts illustrating an example of evaluation results on overlapping ratios and peak outputs, with regard to the height of the protrusions P in the direction along the surface Wa at the end edge 10a observed when the aluminum foil having the polymer insulation layers was cut. The energy of the laser light L per pulse was in the range of 2 to 10 [mJ]. The rise time Tr was in the range of 0.5 to 2 [µs].

Further, as for the laser cutting process on the aluminum foil having the polymer insulation layers, we conducted an experiment with a cutting process performing the scan twice on mutually the same path, in addition to the cutting process performing the scan once. The reason is that because the insulation layers 13 produced by using the polymer had a low heat absorption rate, and cutting by performing the scan once was found to be difficult in some situations. FIG. 26 illustrates evaluation results obtained from the cutting process performing the scan once. FIG. 27 illustrates evaluation results obtained from the cutting process performing the scan twice. The standards used for judging the height of the protrusions P were the same as those used for the uncoated aluminum foil.

As illustrated in FIG. 26, in the example of the cutting process performing the scan once, it became clear that desirable peak outputs were 600 [W] or more and 800 [W] or less and that desirable overlapping ratios were 72 [%] or more and 80 [%] or less.

Further, as illustrated in FIG. 27, in the example of the cutting process performing the scan twice, it became clear that desirable peak outputs were 400 [W] or more and 600 [W] or less and that desirable overlapping ratios were 63 [%] or more and 74 [%] or less.

Table 9 is a table indicating numerical values at the data points in FIG. 26. Table 10 is a table indicating numerical values at the data points in FIG. 27.

Table 9

| GOOD | | POOR | |
|---|---|---|---|
| OVERLAPPING RATIO [%] | PEAK OUTPUT [W] | OVERLAPPING RATIO [%] | PEAK OUTPUT [W] |
| 72.22222 | 800 | 54.54545 | 1000 |
| 80.0001 | 800 | 80 | 1000 |
| 72.2222 | 700 | 95.28301 | 1000 |
| 80.0039 | 700 | 68.75 | 800 |
| 72 | 600 | 85.0887 | 800 |
| 80.0877 | 600 | 54.54546 | 600 |
| | | 70.0789 | 600 |
| | | 85.0871 | 600 |
| | | 72.0987 | 500 |
| | | 80.0801 | 500 |
| | | 54.54546 | 400 |
| | | 80 | 400 |
| | | 90.0383 | 400 |
| | | 54.54546 | 300 |
| | | 80.08382 | 200 |
| | | 90.03819 | 200 |

Table 10

| GOOD | | POOR | |
|---|---|---|---|
| OVERLAPPING RATIO [%] | PEAK OUTPUT [W] | OVERLAPPING RATIO [%] | PEAK OUTPUT [W] |
| 63.63636 | 600 | 61.0034 | 1000 |

(continued)

| GOOD | | POOR | |
|---|---|---|---|
| OVERLAPPING RATIO [%] | PEAK OUTPUT [W] | OVERLAPPING RATIO [%] | PEAK OUTPUT [W] |
| 64.28571 | 600 | 60.0834 | 800 |
| 65.51724 | 500 | 70.0849 | 800 |
| 73.68421 | 500 | 82.0008 | 800 |
| 63.63636 | 400 | 90.0874 | 800 |
| 73.68421 | 400 | 60.0083 | 600 |
| | | 81.00843 | 600 |
| | | 58.00829 | 400 |
| | | 80.0384 | 400 |
| | | 59.00843 | 200 |
| | | 63.0834 | 200 |
| | | 71.0038 | 200 |
| | | 80 | 200 |
| | | 83.00843 | 100 |
| | | 95 | 200 |

When the scan is performed twice, the peak outputs and the overlapping ratios may be mutually the same or may be mutually different between the first scan and the second scan. Further, the scan may be performed two or more times. It is also acceptable to perform the scan multiple times in the laser cutting process on an aluminum foil having an active material or on an aluminum foil having ceramic insulation layers. In addition, the scan performed multiple times may include the scan performed two or more times by using mutually-different laser light irradiation conditions such as pulse frequencies, irradiation energy levels, peak outputs, and/or overlapping ratios.

As explained above, according to the present embodiment, by using the method for laser cutting the metal foil that forms a positive electrode of a battery, it is possible to inhibit the formation or an increase of the protrusions D in the thickness direction at the end edge 10a, of the protrusions P in the direction along the surface Wa at the end edge 10a, and of the discoloration region H, by appropriately setting the pulse frequency, the irradiation energy, the peak output, the overlapping ratio, and/or the like. Consequently, according to the present embodiment, it is possible to realize the metal foil laser cutting process having higher quality.

[Processing Negative Electrode]

[Copper Foil Having Active Material: Protrusions in Thickness Direction]

We performed an experiment on a copper foil having an active material (where the active material was a graphite composite material having a thickness of 90 [μm]). The preferable processing conditions obtained from the results of the experiment performed on the copper foil having the active material are applicable to a laser cutting process performed in the covered site Pc.

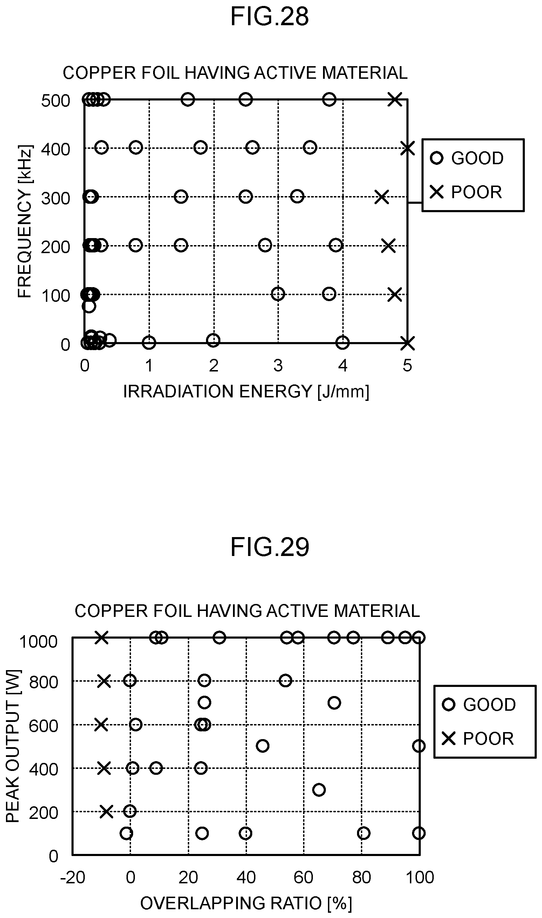

From the experiment, it became clear that, as for the protrusions D (see FIG. 15) in the thickness direction (the Z direction) at the end edge 10a, the height thereof varies depending on the irradiation energy of the laser light L and the frequency of the pulse. FIG. 28 is a chart illustrating an example of evaluation results on irradiation energy of the laser light L and frequencies of the pulse, with regard to the height of the protrusions D in the thickness direction at the end edge 10a observed when the copper foil coated with the active material was cut. The energy of the laser light L per pulse was in the range of 2 to 50 [mJ]. The rise time Tr was in the range of 0.5 to 2 [μs]. Further, the frequency being 0 [kHz] denotes a state in which the laser light L was continuously emitted.

The irradiation energy E [J/mm] denotes the energy with which a unit length of the surface Wa is irradiated and can be expressed by using Expression (6) presented below:

$$E = Pp \times Dr / (100 \times v) \qquad (6)$$

where Pp denotes a peak output [W], whereas Dr denotes a duty ratio [%], and v denotes a scanning speed [mm/s]. The state in which the frequency of the pulse was 0 indicates a state in which the laser light was emitted continuously, and not intermittently.

In FIG. 28, the circles ○ ("GOOD") represent the situations where the height (hereinafter, "first height") of the protrusions D from the surface Wa along the Z direction was 10 [μm] or smaller, whereas the crosses × ("POOR") represent the situations where the first height was larger than 10 [μm].

As illustrated in FIG. 28, it became clear that desirable frequencies were 500 [kHz] or less, whereas desirable irradiation energy was 0.005 [J/mm] or more and 4.0 [J/mm] or less. We consider the reason is that the protrusions D occur when the amount of applied energy exceeds a prescribed level.

Table 11 is a table indicating numerical values at the data points in FIG. 28.

Table 11

| GOOD | | | | POOR | |
|---|---|---|---|---|---|
| IRRADIATION ENERGY [J/mm] | FREQUENCY [kHz] | IRRADIATION ENERGY [J/mm] | FREQUENCY [kHz] | IRRADIATION ENERGY [J/mm] | FREQUENCY [kHz] |
| 0.2 | 500 | 0.15 | 100 | 5 | 0 |
| 0.12 | 100 | 0.06 | 100 | 4.8 | 500 |
| 0.1 | 200 | 0.075 | 100 | 5 | 400 |
| 0.08 | 200 | 0.25 | 10 | 4.6 | 300 |
| 0.08 | 200 | 0.1 | 10 | 4.7 | 200 |
| 0.1 | 200 | 2 | 5 | 4.8 | 100 |
| 0.12 | 300 | 0.4 | 5 | | |
| 0.105 | 100 | 0.25 | 0 | | |
| 0.09 | 100 | 0.05 | 0 | | |
| 0.06 | 100 | 0.3 | 500 | | |
| 0.08 | 100 | 0.266667 | 200 | | |
| 0.08 | 300 | 0.266667 | 400 | | |
| 0.12 | 100 | 0.08 | 75 | | |
| 0.12 | 200 | 0.8 | 400 | | |
| 0.15 | 0 | 0.12 | 12.5 | | |
| 0.08 | 200 | 0.24375 | 1000 | | |
| 0.08 | 500 | 0.75 | 1000 | | |
| 0.14 | 500 | 1.6 | 500 | | |
| 0.15 | 200 | 1.8 | 400 | | |
| 0.125 | 200 | 1.5 | 300 | | |
| 0.12 | 200 | 2.5 | 500 | | |
| 0.16 | 200 | 2.6 | 400 | | |
| 0.12 | 200 | 2.5 | 300 | | |
| 0.1 | 200 | 2.8 | 200 | | |
| 0.175 | 0 | 3 | 100 | | |
| 0.2 | 500 | 3.8 | 500 | | |
| 0.25 | 0 | 3.5 | 400 | | |
| 0.1 | 0 | 3.3 | 300 | | |
| 1.5 | 200 | 3.9 | 200 | | |
| 0.8 | 200 | 3.8 | 100 | | |

(continued)

| GOOD | | | | POOR | |
|---|---|---|---|---|---|
| IRRADIATION ENERGY [J/mm] | FREQUENCY [kHz] | IRRADIATION ENERGY [J/mm] | FREQUENCY [kHz] | IRRADIATION ENERGY [J/mm] | FREQUENCY [kHz] |
| 1 | 0 | 4 | 0 | | |

[Copper Foil Having Active Material: Protrusions in Direction Along Surface]

From the experiment, it became clear that, as for the protrusions P (see FIG. 16) in the direction (the Y direction) along the surface Wa at the end edge 10a, the height thereof varies depending on the overlapping ratio and the peak output of the pulse (Pp, see FIG. 4). FIG. 29 is a chart illustrating an example of evaluation results on overlapping ratios and peak outputs, with regard to the height of the protrusions P in the direction along the surface Wa at the end edge 10a observed when the copper foil coated with the active material was cut. The energy of the laser light L per pulse was in the range of 2 to 50 [mJ]. The rise time Tr was in the range of 0.5 to 10 [$\mu$s]. Further, the overlapping ratio being 100 [%] denotes a state in which the laser light L was continuously emitted.

In FIG. 29, the circles ○ ("GOOD") represent the situations where the height (hereinafter, "second height") of the protrusions P from the end edge 10a along the Y direction was 20 [$\mu$m] or smaller, whereas the crosses × ("POOR") represent the situations where the second height was larger than 20 [$\mu$m].

As illustrated in FIG. 29, it became clear that desirable peak outputs were 100 [W] or more and 1000 [W] or less and that desirable overlapping ratios were -1 [%] or more. We consider that the reason is as follows: The more regions are not irradiated with the laser light L due to a low overlapping ratio, the more easily the protrusions P occur. The larger the peak output is, the larger is a kerf width (a cut width) and the less easily the protrusions P occur.

Table 12 is a table indicating numerical values at the data points in FIG. 29.

Table 12

| GOOD | | POOR | |
|---|---|---|---|
| OVERLAPPING RATIO [%] | PEAK OUTPUT [W] | OVERLAPPING RATIO [%] | PEAK OUTPUT [W] |
| 58.33333 | 1000 | -8.10811 | 200 |
| 54.02299 | 800 | -9 | 400 |
| 25.92593 | 600 | -10 | 600 |
| 24.5283 | 400 | -9 | 800 |
| 45.94595 | 500 | -10 | 1000 |
| 70.80292 | 1000 | | |
| 77.27273 | 1000 | | |
| 25 | 100 | | |
| 40 | 100 | | |
| 81 | 100 | | |
| 100 | 100 | | |
| 100 | 500 | | |
| 100 | 1000 | | |
| 65.51724 | 300 | | |
| 25.92593 | 800 | | |
| 31.03448 | 1000 | | |
| 25.92593 | 700 | | |
| 70.80292 | 700 | | |
| 95.30516 | 1000 | | |
| 11.11111 | 1000 | | |

(continued)

| GOOD | | POOR | |
|---|---|---|---|
| OVERLAPPING RATIO [%] | PEAK OUTPUT [W] | OVERLAPPING RATIO [%] | PEAK OUTPUT [W] |
| 9.090909 | 1000 | | |
| 9.090909 | 400 | | |
| 54.54545 | 1000 | | |
| 89.13043 | 1000 | | |
| 0.01 | 800 | | |
| 2.09223 | 600 | | |
| 1.01389 | 400 | | |
| 0 | 200 | | |
| -1.08347 | 100 | | |

[Copper Foil Having Active Material: Discoloration Region]

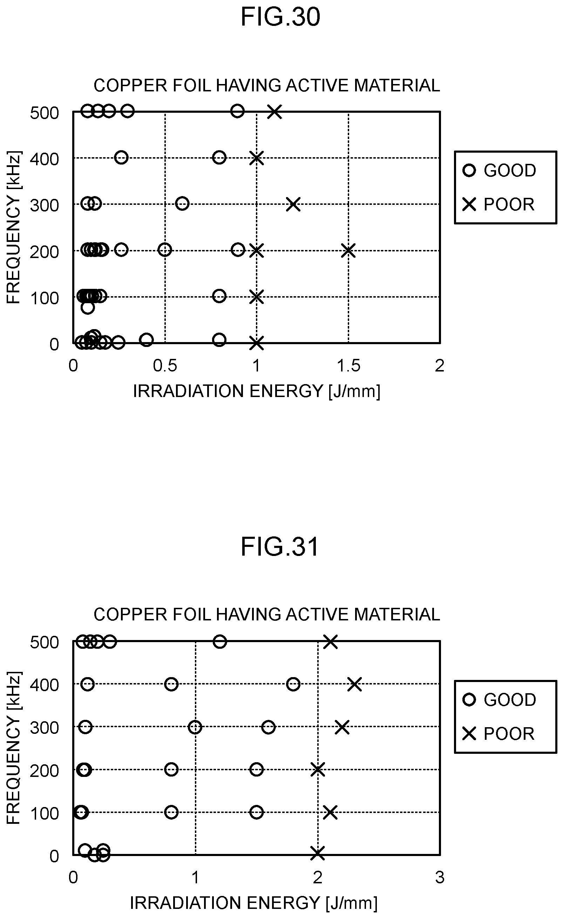

From the experiment, it became clear that, as for the discoloration region H (see FIG. 17) extending along the end edge 10a to have a certain width, the width thereof varies depending on the irradiation energy of the laser light L and the frequency of the pulse. FIG. 30 is a chart illustrating an example of evaluation results on the irradiation energy of the laser light L and frequencies of the pulse, with regard to the width of the discoloration region H at the end edge 10a observed when the copper foil coated with the active material was cut. The discoloration region H was a region in the vicinity of the end edge 10a where brightness levels in a captured image were 53 [%] or less as compared to a general region. In this situation, the general region refers to a region that had little impact from the cutting of the metal foil 10B subject to the cutting process using the laser light L. For example, the general region may be a site distant from the end edge 10a by 1000 [μm] or longer. The energy of the laser light L per pulse was in the range of 2 to 10 [mJ]. The rise time Tr was in the range of 0.5 to 2 [μs].

In FIG. 30, the circles ○ ("GOOD") represent the situations where the width of the discoloration region H along the Y direction was 100 [μm] or less, whereas the crosses × ("POOR") represent the situations where the width of the discoloration region H was more than 100 [μm]. The discoloration region H was a region in the vicinity of the end edge 10a where brightness levels in a captured image were 45% or less as compared to a general region. In this situation, the general region refers to a region that had little impact from the cutting of the metal foil 10B subject to the cutting process using the laser light L. For example, the general region may be a site distant from the end edge 10a by 1000 [μm] or longer.

As illustrated in FIG. 30, it became clear that desirable frequencies were 500 [kHz] or less, whereas desirable irradiation energy was 0.05 [J/mm] or more and 0.9 [J/mm] or less. We consider the reason is that the discoloration by thermal effects is caused more easily, when the amount of applied energy exceeds a prescribed level.

Table 13 is a table indicating numerical values at the data points in FIG. 30.

Table 13

| GOOD | | | | POOR | |
|---|---|---|---|---|---|
| IRRADIATION ENERGY [J/mm] | FREQUENCY [kHz] | IRRADIATION ENERGY [J/mm] | FREQUENCY [kHz] | IRRADIATION ENERGY [J/mm] | FREQUENCY [kHz] |
| 0.12 | 200 | 0.2 | 500 | 1.5 | 200 |
| 0.08 | 200 | 0.25 | 0 | 1 | 0 |
| 0.08 | 200 | 0.1 | 0 | 1.1 | 500 |
| 0.08 | 100 | 0.075 | 0 | 1 | 400 |
| 0.12 | 100 | 0.15 | 100 | 1.2 | 300 |
| 0.1 | 200 | 0.075 | 100 | 1 | 200 |
| 0.08 | 500 | 0.1 | 10 | 1 | 100 |
| 0.06 | 100 | 0.4 | 5 | | |

(continued)

| GOOD | | | | POOR | |
|---|---|---|---|---|---|
| IRRADIATION ENERGY [J/mm] | FREQUENCY [kHz] | IRRADIATION ENERGY [J/mm] | FREQUENCY [kHz] | IRRADIATION ENERGY [J/mm] | FREQUENCY [kHz] |
| 0.15 | 200 | 0.8 | 5 | | |
| 0.125 | 200 | 0.25 | 0 | | |
| 0.16 | 200 | 0.05 | 0 | | |
| 0.12 | 200 | 0.3 | 500 | | |
| 0.12 | 100 | 0.266667 | 200 | | |
| 0.1 | 200 | 0.266667 | 400 | | |
| 0.12 | 300 | 0.08 | 75 | | |
| 0.105 | 100 | 0.8 | 400 | | |
| 0.09 | 100 | 0.12 | 12.5 | | |
| 0.06 | 100 | 0.24375 | 1000 | | |
| 0.08 | 300 | 0.75 | 1000 | | |
| 0.12 | 200 | 0.5 | 200 | | |
| 0.15 | 0 | 0.6 | 300 | | |
| 0.08 | 200 | 0.9 | 200 | | |
| 0.14 | 500 | 0.8 | 100 | | |
| 0.175 | 0 | 0.9 | 500 | | |

[Copper Foil (Having No Active Material): Protrusions in Thickness Direction]

We performed the same experiment as that performed on the copper foil having the active material, also on a copper foil (having no active material and having a thickness of 10 [$\mu$m]). The preferable processing conditions obtained from the results of the experiment performed on the copper foil (having no active material) are applicable to a laser cutting process performed in the exposed site Pe.

FIG. 31 is a chart illustrating an example of evaluation results on irradiation energy of the laser light L and frequencies of the pulse, with regard to the height of the protrusions D in the thickness direction at the end edge 10a observed when the copper foil not coated with an active material was cut. The standards used for judging the height of the protrusions D were the same as those used for the copper foil having the active material. The energy of the laser light L per pulse was in the range of 2 to 10 [mJ]. The rise time Tr was in the range of 0.5 to 2 [$\mu$s].

As illustrated in FIG. 31, it became clear that desirable frequencies were 500 [kHz] or less and that desirable irradiation energy was 0.06 [J/mm] or more and 1.8 [J/mm] or less.

Table 14 is a table indicating numerical values at the data points in FIG. 31.

Table 14

| GOOD | | POOR | |
|---|---|---|---|
| IRRADIATION ENERGY [J/mm] | FREQUENCY [kHz] | IRRADIATION ENERGY [J/mm] | FREQUENCY [kHz] |
| 0.1 | 200 | 5 | 0 |
| 0.08 | 200 | 2 | 5 |
| 0.08 | 500 | 2.1 | 100 |
| 0.14 | 500 | 2 | 200 |
| 0.175 | 0 | 2.2 | 300 |
| 0.2 | 500 | 2.3 | 400 |
| 0.06 | 100 | 2.1 | 500 |

(continued)

| GOOD | | POOR | |
|---|---|---|---|
| IRRADIATION ENERGY [J/mm] | FREQUENCY [kHz] | IRRADIATION ENERGY [J/mm] | FREQUENCY [kHz] |
| 0.075 | 100 | | |
| 0.1 | 10 | | |
| 0.1 | 300 | | |
| 0.12 | 400 | | |
| 1.5 | 200 | | |
| 0.25 | 10 | | |
| 0.25 | 0 | | |
| 0.3 | 500 | | |
| 0.8 | 200 | | |
| 0.8 | 400 | | |
| 0.8 | 400 | | |
| 0.24375 | 1000 | | |
| 1 | 300 | | |
| 1.6 | 300 | | |
| 0.8 | 100 | | |
| 1.5 | 100 | | |
| 1.8 | 400 | | |
| 1.2 | 500 | | |

[Copper Foil (Having No Active Material): Protrusions in Direction Along Surface]

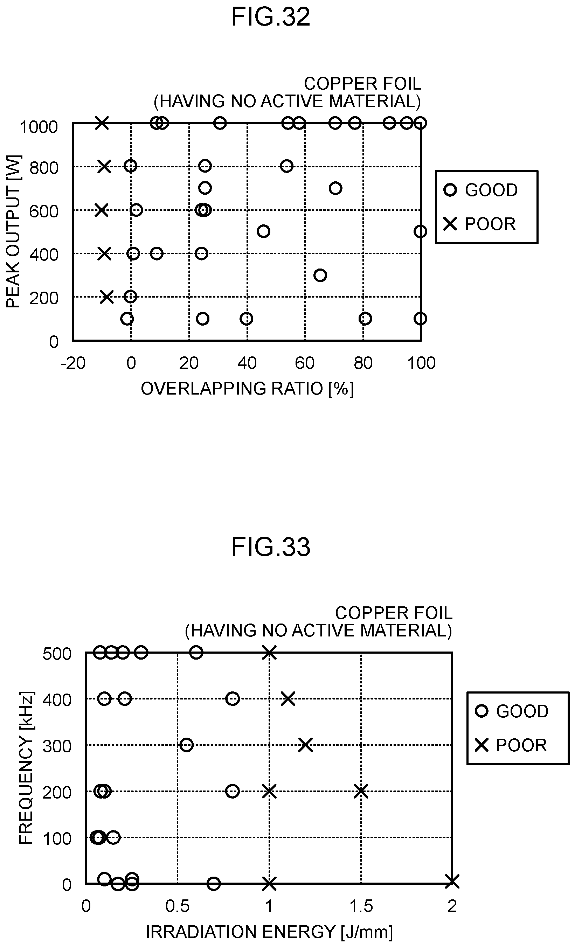

FIG. 32 is a chart illustrating an example of evaluation results on overlapping ratios and peak outputs, with regard to the height of the protrusions P in the direction along the surface Wa at the end edge 10a observed when the copper foil not coated with an active material was cut. The standards used for judging the height of the protrusions P were the same as those used for the copper foil having the active material. The energy of the laser light L per pulse was in the range of 2 to 50 [mJ]. The rise time Tr was in the range of 0.5 to 2 [μs].

As illustrated in FIG. 32, it became clear that desirable peak outputs were 100 [W] or more and 1000 [W] or less and that desirable overlapping ratios ("EXCELLENT") were -1 [%] or more.

Table 15 is a table indicating numerical values at the data points in FIG. 32.

Table 15

| GOOD | | POOR | |
|---|---|---|---|
| IRRADIATION ENERGY [J/mm] | FREQUENCY [kHz] | IRRADIATION ENERGY [J/mm] | FREQUENCY [kHz] |
| 58.3333 | 1000 | -10 | 1000 |
| 54.023 | 800 | -8.10811 | 200 |
| 25.9259 | 600 | -9.3 | 400 |
| 24.5283 | 400 | -9.3 | 800 |
| 24.5283 | 600 | -10 | 600 |
| 45.9459 | 500 | | |
| 70.8029 | 1000 | | |
| 77.2727 | 1000 | | |
| 25.0032 | 100 | | |

(continued)

| GOOD | | POOR | |
|---|---|---|---|
| IRRADIATION ENERGY [J/mm] | FREQUENCY [kHz] | IRRADIATION ENERGY [J/mm] | FREQUENCY [kHz] |
| 40 | 100 | | |
| 81.011 | 100 | | |
| 100 | 100 | | |
| 100 | 500 | | |
| 100 | 1000 | | |
| 65.51724 | 300 | | |
| 25.92593 | 800 | | |
| 31.03448 | 1000 | | |
| 25.92593 | 700 | | |
| 70.80292 | 700 | | |
| 95.30516 | 1000 | | |
| 11.11111 | 1000 | | |
| 9.09091 | 1000 | | |
| 9.09091 | 400 | | |
| 54.54545 | 1000 | | |
| 89.13043 | 1000 | | |
| -21.2121 | 400 | | |
| 0 | 800 | | |
| 2.0101 | 600 | | |
| 1.00303 | 400 | | |
| 0 | 200 | | |
| -1.08787 | 100 | | |

[Copper Foil (Having No Active Material): Discoloration Region]

FIG. 33 is a chart illustrating an example of evaluation results on the irradiation energy of the laser light L and frequencies of the pulse, with regard to the width of the discoloration region H at the end edge 10a observed when the copper foil not coated with an active material was cut. The standards used for judging the width of the discoloration region H were the same as those used for the copper foil having the active material. The energy of the laser light L per pulse was in the range of 2 to 10 [mJ]. The rise time Tr was in the range of 0.5 to 2 [µs].

As illustrated in FIG. 33, it became clear that desirable frequencies were 500 [kHz] or less and that desirable irradiation energy was 0.06 [J/mm] or more and 0.8 [J/mm] or less.

Table 16 is a table indicating numerical values at the data points in FIG. 33.

Table 16

| GOOD | | POOR | |
|---|---|---|---|
| IRRADIATION ENERGY [J/mm] | FREQUENCY [kHz] | IRRADIATION ENERGY [J/mm] | FREQUENCY [kHz] |
| 0.1 | 200 | 1.5 | 200 |
| 0.08 | 200 | 1 | 0 |
| 0.08 | 500 | 2 | 5 |
| 0.14 | 500 | 1 | 500 |
| 0.175 | 0 | 1.1 | 400 |

(continued)

| GOOD | | POOR | |
|---|---|---|---|
| IRRADIATION ENERGY [J/mm] | FREQUENCY [kHz] | IRRADIATION ENERGY [J/mm] | FREQUENCY [kHz] |
| 0.2 | 500 | 1.2 | 300 |
| 0.06 | 100 | 1 | 200 |
| 0.075 | 100 | | |
| 0.3 | 500 | | |
| 0.8 | 200 | | |
| 0.8 | 400 | | |
| 0.1 | 400 | | |
| 0.21 | 400 | | |
| 0.6 | 500 | | |
| 0.55 | 300 | | |
| 0.7 | 0 | | |
| 0.15 | 100 | | |
| 0.25 | 10 | | |
| 0.1 | 10 | | |
| 0.25 | 0 | | |

As explained above, according to the present embodiment, by using the method for laser cutting the metal foil that forms a negative electrode of a battery, it is possible to inhibit the formation or an increase of the protrusions D in the thickness direction at the end edge 10a, of the protrusions P in the direction along the surface Wa at the end edge 10a, and of the discoloration region H, by appropriately setting the pulse frequency, the irradiation energy, the peak output, the overlapping ratio, and/or the like. Consequently, according to the present embodiment, it is possible to realize the metal foil laser cutting process having higher quality.

Second Embodiment

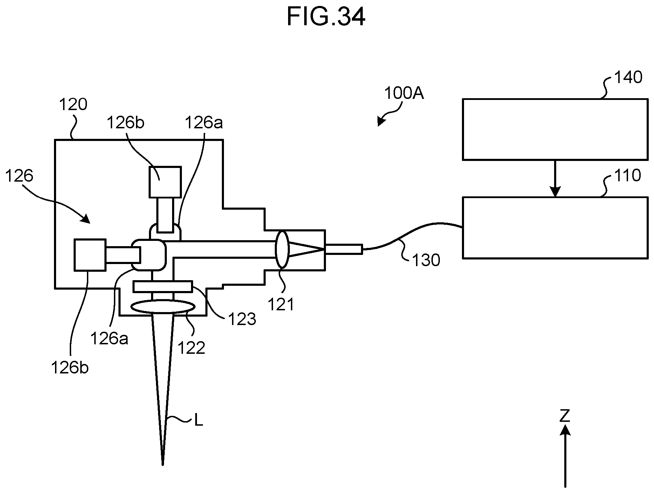

FIG. 34 is a schematic diagram of a laser cutting apparatus 100A according to a second embodiment. In the present embodiment, the optical head 120 includes a galvanometer scanner 126 provided between the collimate lens 121 and the condenser lens 122. The galvanometer scanner 126 includes two mirrors 126a. As the postures of the two mirrors 126a change, the irradiation direction and the irradiation position of the laser light L change. In other words, the laser cutting apparatus 100A is capable of performing a scan using the laser light L, by moving the irradiation position of the laser light L, without moving the optical head 120. The controller 140 is capable of controlling operations of a motor 126b corresponding to the mirrors 126a, so that the angles (the postures) of the mirrors 126a change. According to the present embodiment also, it is possible to achieve actions and advantageous effects that are similar to those achieved in the first embodiment described above.

Although a number of embodiments of the present invention have thus been presented as examples, the embodiments described above are merely examples and are not intended to limit the scope of the invention. It is possible to carry out the above embodiments in other various forms. It is possible to apply thereto various omissions, substitutions, combinations, and changes without departing from the gist of the invention. Further, it is possible to carry out the invention by changing, as appropriate, any of the specifications such as configurations, shapes, and the like (including structures, types, directions, models, sizes, lengths, widths, thicknesses, heights, quantities, positional arrangements, positions, materials, and so forth).

Industrial Applicability

It is possible to apply the present invention to a metal foil laser cutting method.

Reference Signs List

10, 10A, 10B METAL FOIL
10a END EDGE
11 METAL LAYER
12 ACTIVE MATERIAL LAYER
13 INSULATION LAYER (ELECTRICALLY-INSULATIVE LAYER)
100, 100A LASER CUTTING APPARATUS
110 LASER APPARATUS
120 OPTICAL HEAD
121 COLLIMATE LENS
122 CONDENSER LENS
123 DOE
126 GALVANOMETER SCANNER
126a MIRROR
126b MOTOR
130 OPTICAL FIBER
140 CONTROLLER
A OVERLAPPING REGION
Ax OPTICAL AXIS
a DISTANCE
C CENTERLINE
D PROTRUSION
$D_a$ BEAM DIAMETER (SPOT DIAMETER)
$D_c$, $D_f$ BEAM DIAMETER
$f_1$, $f_2$ FOCAL POINT DISTANCE
Dr DUTY RATIO
E IRRADIATION ENERGY
H DISCOLORATION REGION
I DISTANCE
L LASER LIGHT
P PROTRUSION
Pc1, Pc2 COVERED SITE
Pe EXPOSED SITE
Pf FOCAL POINT POSITION
Pn, Pn+1, Pq, Pr IRRADIATION REGION
Pt SCANNING PATH
R OVERLAPPING RATIO
SD SCANNING DIRECTION
Tp EMISSION PERIOD
Tr RISE TIME
W WORKPIECE
Wa SURFACE
X DIRECTION
Y DIRECTION
Z DIRECTION
$\theta_1$ BEAM DIFFUSION ANGLE
$\theta_2$ BEAM DIVERGENCE ANGLE

**Claims**

1. A metal foil laser cutting method comprising:
intermittently irradiating a metal foil that forms an electrode of a battery and that servs as a workpiece with a pulse of a laser light of which energy per pulse is 2 [mJ] or more and 100 [mJ] or less and of which rise time is 2 [μs] or shorter to laser cut the workpiece.

2. The metal foil laser cutting method according to claim 1, wherein the pulse is intermittently emitted at a frequency of 500 [kHz] or less.

3. The metal foil laser cutting method according to claim 1, wherein

   the electrode is a positive electrode, and
   an overlapping ratio R between an irradiation region of the pulse and an irradiation region of a following pulse is -21 [%] or more, when the overlapping ratio R is defined by using Expression (1) presented below:

   $$R = L2 / L1 \qquad\qquad (1)$$

   where L1 denotes a length of the irradiation region in a scanning direction; and
   L2 denotes a length, in the scanning direction, of an overlapping region between the pulse and the following pulse if the pulse and the following pulse overlap with each other in the scanning direction, while L2 is equal to 0 if the pulse and the following pulse touch each other in the scanning direction, and is equal to -1 if the pulse and the following pulse are positioned apart from each other in the scanning direction by a distance I (> 0).

4. The metal foil laser cutting method according to claim 1, wherein

   the electrode is a positive electrode, and
   irradiation energy of the laser light is 0.05 [J/mm] or more and to 2.1 [J/mm] or less.

5. The metal foil laser cutting method according to claim 1, wherein

   the electrode is a negative electrode, and
   an overlapping ratio R between an irradiation region of the pulse and an irradiation region of a following pulse is -1 [%] or more, when the overlapping ratio R is defined by using Expression (1) presented below:

   $$R = L2 / L1 \qquad\qquad (1)$$

   where L1 denotes a length of the irradiation region in a scanning direction; and
   L2 denotes a length, in the scanning direction, of an overlapping region between the pulse and the following pulse if the pulse and the following pulse overlap with each other in the scanning direction, while L2 is equal to 0 if the pulse and the following pulse touch each other in the scanning direction, and is equal to -1 if the pulse and the following pulse are positioned apart from each other in the scanning direction by a distance I (> 0).

6. The metal foil laser cutting method according to claim 1, wherein

   the electrode is a negative electrode, and
   irradiation energy of the laser light is 0.005 [J/mm] or more and 4.0 [J/mm] or less.

7. The metal foil laser cutting method according to claim 1, wherein the metal foil has a thickness of 500 [μm] or less.

8. The metal foil laser cutting method according to claim 1, wherein the metal foil has a site covered by a coating and a site not covered by a coating.

9. The metal foil laser cutting method according to claim 1, wherein the laser light has a spot diameter of 100 [μm] or less.

10. The metal foil laser cutting method according to claim 9, wherein the laser light has a spot diameter of 50 [μm] or less.

11. The metal foil laser cutting method according to claim 10, wherein the laser light has a spot diameter of 28 [μm] or less.

12. The metal foil laser cutting method according to claim 1, wherein the laser light has a peak output of 100 [W] or more.

13. The metal foil laser cutting method according to claim 1, wherein the metal foil includes a metal layer made of an aluminum-based material.

**14.** The metal foil laser cutting method according to claim 13, wherein the laser light has a peak output of 200 [W] or more.

**15.** The metal foil laser cutting method according to claim 13 or 14, wherein the metal foil includes an active material layer applied to a surface of the metal layer.

**16.** The metal foil laser cutting method according to claim 15, wherein irradiation energy of the laser light is 0.06 [J/mm] or more and 0.23 [J/mm] or less.

**17.** The metal foil laser cutting method according to claim 1, wherein the metal foil includes a metal layer made of an aluminum-based material and an electrically-insulative ceramic layer made of ceramics, the electrically-insulative ceramic layer being applied to a surface of the metal layer.

**18.** The metal foil laser cutting method according to claim 17, wherein the pulse has a frequency of 200 [kHz] or less.

**19.** The metal foil laser cutting method according to claim 17 or 18, wherein irradiation energy of the laser light is 0.05 [J/mm] or more and 0.26 [J/mm] or less.

**20.** The metal foil laser cutting method according to claim 17, wherein

an overlapping ratio R between an irradiation region of the pulse and an irradiation region of a following pulse is 24 [%] or more, when the overlapping ratio R is defined by using Expression (1) presented below:

$$R = L2 / L1 \hspace{4cm} (1)$$

where L1 denotes a length of the irradiation region in a scanning direction; and
L2 denotes a length, in the scanning direction, of an overlapping region between the pulse and the following pulse if the pulse and the following pulse overlap with each other in the scanning direction, while L2 is equal to 0 if the pulse and the following pulse touch each other in the scanning direction, and is equal to -1 if the pulse and the following pulse are positioned apart from each other in the scanning direction by a distance I (> 0).

**21.** The metal foil laser cutting method according to claim 1, wherein the metal foil includes a metal layer made of an aluminum-based material and an electrically-insulative polymer layer made of a polymer, the electrically-insulative polymer layer being applied to a surface of the metal layer.

**22.** The metal foil laser cutting method according to claim 21, wherein

when the workpiece is cut by performing a scan once with the laser light,
the laser light has a peak output of 600 [W] or more and 800 [W] or less, and
an overlapping ratio R between an irradiation region of the pulse and an irradiation region of a following pulse is 72 [%] or more and 80 [%] or less, when the overlapping ratio R is defined by using Expression (1) presented below:

$$R = L2 / L1 \hspace{4cm} (1)$$

where L1 denotes a length of the irradiation region in a scanning direction; and
L2 denotes a length, in the scanning direction, of an overlapping region between the pulse and the following pulse if the pulse and the following pulse overlap with each other in the scanning direction, while L2 is equal to 0 if the pulse and the following pulse touch each other in the scanning direction, and is equal to -1 if the pulse and the following pulse are positioned apart from each other in the scanning direction by a distance I (> 0).

**23.** The metal foil laser cutting method according to claim 21, wherein

when the workpiece is cut by performing a scan twice with the laser light,
the laser light has a peak output of 400 [W] or more and 600 [W] or less, and
an overlapping ratio R between an irradiation region of the pulse and an irradiation region of a following pulse is 63 [%] or more and 74 [%] or less, when the overlapping ratio R is defined by using Expression (1) presented below:

$$R = L2 / L1 \tag{1}$$

where L1 denotes a length of the irradiation region in a scanning direction; and
L2 denotes a length, in the scanning direction, of an overlapping region between the pulse and the following pulse if the pulse and the following pulse overlap with each other in the scanning direction, while L2 is equal to 0 if the pulse and the following pulse touch each other in the scanning direction, and is equal to -1 if the pulse and the following pulse are positioned apart from each other in the scanning direction by a distance I (> 0).

24. The metal foil laser cutting method according to claim 1, wherein multiple scans each are performed on a same path.

25. The metal foil laser cutting method according to claim 24, wherein the multiple scans include the two or more scans each with different laser light irradiation conditions.

26. The metal foil laser cutting method according to claim 1, wherein the metal foil includes a metal layer made of a copper-based material.

27. The metal foil laser cutting method according to claim 26, wherein irradiation energy of the laser light is 0.8 [J/mm] or less.

28. The metal foil laser cutting method according to claim 26 or 27, wherein the metal foil includes an active material layer applied to a surface of the metal layer.

29. The metal foil laser cutting method according to claim 28, wherein

the metal foil includes an active material layer applied to a surface of the metal layer, and
irradiation energy of the laser light is 0.9 [J/mm] or less.

# FIG.1

# FIG.2

## FIG.3

10A(10,W)

Pt

10a

11(Wa,Pe)

13(Wa,Pc2)

12(Wa,Pc1)

Z
⊙

## FIG.4

10B(10,W)

12

Wa

11

12

Z

# FIG.5

10B(10,W)

Pt

10a

10(Pe)

12(Pc)

Wa

Z
⊙

# FIG.6

OUTPUT
[W]

Pp

Tp

Tc

TIME

## FIG.7

## FIG.8

# FIG.9

(a)

(b)

# FIG.10

(a)

(c)

(b)

(d)

# FIG.11

# FIG.12

# FIG.13

# FIG.14

# FIG.15

# FIG.16

# FIG.17

10B(10,W)                    10a

H

Y
X ← ⊙ Z
(SD)

## FIG.18

ALUMINUM FOIL (UNCOATED)

## FIG.19

ALUMINUM FOIL (UNCOATED)

# FIG.20

ALUMINUM FOIL (UNCOATED)

# FIG.21

ALUMINUM FOIL (HAVING ACTIVE MATERIAL LAYER)

# FIG.22

ALUMINUM FOIL (HAVING ACTIVE MATERIAL LAYER)

# FIG.23

ALUMINUM FOIL (HAVING ACTIVE MATERIAL LAYER)

FIG.24

ALUMINUM FOIL (HAVING CERAMIC INSULATION LAYER)

FIG.25

ALUMINUM FOIL (HAVING CERAMIC INSULATION LAYER)

## FIG.26

ALUMINUM FOIL
(HAVING POLYMER INSULATION LAYER, SCAN ONCE)

## FIG.27

ALUMINUM FOIL
(HAVING POLYMER INSULATION LAYER, SCAN TWICE)

## FIG.28

COPPER FOIL HAVING ACTIVE MATERIAL

## FIG.29

COPPER FOIL HAVING ACTIVE MATERIAL

## FIG.30

COPPER FOIL HAVING ACTIVE MATERIAL

## FIG.31

COPPER FOIL HAVING ACTIVE MATERIAL

## FIG.32

COPPER FOIL
(HAVING NO ACTIVE MATERIAL)

○ GOOD
✕ POOR

## FIG.33

COPPER FOIL
(HAVING NO ACTIVE MATERIAL)

○ GOOD
✕ POOR

FIG.34

## INTERNATIONAL SEARCH REPORT

| International application No. |
| --- |
| **PCT/JP2023/037761** |

| A. | CLASSIFICATION OF SUBJECT MATTER |
| --- | --- |

**B23K 26/38**(2014.01)i; **B23K 26/073**(2006.01)i
FI:    B23K26/38 A; B23K26/073

According to International Patent Classification (IPC) or to both national classification and IPC

| B. | FIELDS SEARCHED |
| --- | --- |

Minimum documentation searched (classification system followed by classification symbols)

B23K26/38; B23K26/073

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2007-14993 A (TOYOTA MOTOR CORP.) 25 January 2007 (2007-01-25)<br>paragraphs [0011]-[0027], fig. 1-8 | 1-29 |
| A | WO 2016/208686 A1 (TOYOTA INDUSTRIES CORP.) 29 December 2016 (2016-12-29)<br>entire text, all drawings | 1-29 |
| A | JP 2016-505384 A (LG CHEM, LTD.) 25 February 2016 (2016-02-25)<br>entire text, all drawings | 1-29 |
| A | WO 2022/065407 A1 (THE FURUKAWA ELECTRIC CO., LTD.) 31 March 2022<br>(2022-03-31)<br>entire text, all drawings | 1-29 |
| A | JP 2020-82082 A (TOYOTA CENTRAL R&D LABS., INC.) 04 June 2020 (2020-06-04)<br>entire text, all drawings | 1-29 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 December 2023** | **09 January 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/037761**

| Patent document cited in search report | | | Publication date (day/month/year) | Patent family member(s) | | | Publication date (day/month/year) |
|---|---|---|---|---|---|---|---|
| JP | 2007-14993 | A | 25 January 2007 | (Family: none) | | | |
| WO | 2016/208686 | A1 | 29 December 2016 | (Family: none) | | | |
| JP | 2016-505384 | A | 25 February 2016 | US | 2016/0263705 | A1 | |
| | | | | entire text, all drawings | | | |
| | | | | CN | 104755219 | A | |
| WO | 2022/065407 | A1 | 31 March 2022 | US | 2023/0219167 | A1 | |
| | | | | entire text, all drawings | | | |
| | | | | CN | 116323073 | A | |
| JP | 2020-82082 | A | 04 June 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PATWA, RAHUL et al.** High speed laser cutting of electrodes for advanced batteries. *International Congress on Applications of Lasers & Electro Optics*, 2010